# EUROPÄISCHE PATENTSCHRIFT

(11) **EP 2 434 867 B1**
(45) Veröffentlichungstag und Bekanntmachung des Hinweises auf die Patenterteilung: **09.04.2014**
(21) Anmeldenummer: 10745559.4
(22) Anmeldetag: 16.08.2010
(51) Int. Cl.: A01K 1/12, A01J 5/007

(54) **MELKSTATION UND VERFAHREN ZUM BETREIBEN DERSELBEN AUF DER GRUNDLAGE VON MILCHFLUSSDATEN**
MILKING STATION AND METHOD FOR OPERATING SAID MILKING STATION ON THE BASIS OF MILK FLOW DATA
STATION DE TRAITE ET PROCÉDÉ POUR FAIRE FONCTIONNER CETTE STATION DE TRAITE D'APRÈS DES DONNÉES DE DÉBIT DE LAIT

(43) Veröffentlichungstag der Anmeldung: 04.04.2012
(73) Patentinhaber: Jakob Maier & Wilfried Hatzack Erfinder GbR, 86842 Türkenheim (DE)
(72) Erfinder: Maier, Jakob, 86842 Türkenheim (DE); Hatzack, Wilfried, 86842 Türkenheim (DE)
(74) Vertreter: Grünecker, Kinkeldey, Stockmair & Schwanhäusser
(86) Internationale Anmeldenummer: PCT/EP2010/005021
(87) Internationale Veröffentlichungsnummer: WO 2012/022356

(56) Entgegenhaltungen:
- EP-A1- 0 657 098
- EP-A1- 1 709 867
- WO-A2-2008/028488
- US-A- 4 000 718
- US-A- 5 054 425
- US-A1- 2006 137 615
- US-A1- 2007 272 159

## Beschreibung

Die vorliegende Erfindung betrifft im Allgemeinen Verfahren und Systeme zum semiautomatisierten oder vollautomatisierten Betreiben einer Melkstation.

In der Agrarwirtschaft ist im Hinblick auf die globale Marktsituation die Produktivität der einzelnen Agrarbetriebe und die Qualität der erzeugten Produkte von großer Wichtigkeit. Dies gilt insbesondere auf dem Sektor der Milcherzeugung, da auf diesem Gebiet ein großer wirtschaftlicher Druck auf den Erzeugern lastet. Einerseits sind große Mengen an Milch bei geringen Produktionskosten zu erzeugen und andererseits ist die geforderte Qualität der Milch nur unter großem Aufwand im Hinblick auf das Einhalten der gesetzlichen Regelungen zu gewährleisten. Insbesondere wird durch die gesetzlich verankerte Milchverordnung ein gewisses Verfahren beim Erzeugen der Milch vorgeschrieben, etwa die Sichtkontrolle vor dem eigentlichen Melken der Milch, die Einhaltung einer zulässigen Keimzahl bei der ermolkenen Milch, und dergleichen, die eine vollständige Automatisierung des entsprechenden Melkvorgangs erschweren. Hinzu kommt, dass im Hinblick auf die Qualität und die erzeugbare Menge auch andere Aspekte beim Melkvorgang eine wichtige Rolle spielen, die durch eine vollautomatische Handhabung des Melkvorgangs nur unter großem Aufwand und zum Teil nur bedingt berücksichtigt werden können.

Um eine große Ausbeute bei hoher Qualität dauerhaft zu erreichen, ist der Ablauf des Melkvorgangs möglichst naturnah nachzubilden, so dass damit die natürlichen Abwehrmechanismen der Milchtiere im Hinblick auf das Eindringen von Keimen und Bakterien sowie auch die biologischen Vorgänge bei der Ausbildung der milchbildenden Zellen und deren Entleerung Berücksichtigung finden. So ist es beispielsweise wichtig, das entsprechende Tier vor dem eigentlichen Melkvorgang entsprechend zu stimulieren, so dass das Tier in eine entspannte Stimmung versetzt wird, wodurch sich die Eutermuskulatur lockert und durch Ausschüttung des entsprechenden Hormons die milchbildenden Zellen die Milch in die Euterviertel abgeben. Ferner ist, wie bereits dargelegt ist, eine entsprechende Kontrolle der Milchqualität vorzunehmen, um das Einleiten einer möglicherweise kontaminierten Milch in einen entsprechenden Vorratsbehälter nach Möglichkeit zu vermeiden. Eine geeignete Art der Stimulation erweist sich auch während des Melkvorgangs als günstig, da sich ein höherer Ausmelkungsgrad und damit dauerhaft ein höherer Milchertrag erreichen lassen.

Während der Endphase des Melkvorgangs ist es von besonderer Bedeutung, eine geeignete Stimulation, die ggf. auch individuell für jedes Euterviertel angewendet wird, vorzusehen, um damit einen hohen Grad des Ausmelkens zu erreichen, ohne jedoch einen für das Tier unangenehmen Reiz beim Absaugen der Milch auszuüben, so dass negative Auswirkungen in der abschließenden Phase des Melkvorgangs gering bleiben.

Insgesamt ist der Melkvorgang ein sehr komplexer Prozess, der in der Regel für die individuellen Tiere sehr unterschiedlich verläuft, so dass konventionelle automatisierte standardisierte Melkvorgänge in der Regel nur bedingt geeignet sind, einen dauerhaft hohen Ertrag bei hoher Qualität der Milch zu erreichen. Es werden daher große Anstrengungen auf dem Gebiet der automatischen Melkanlagen unternommen, um den Melkvorgang den Gegebenheiten der Tiere besser anzupassen. Bei zunehmender Flexibilität in der Anpassung des automatisierten Melkvorgangs sind jedoch die entsprechenden vollautomatischen Anlagen, etwa Melkroboter, in der Anschaffung sehr kostenintensiv und weisen nur einen beschränkten Durchsatz auf, so dass diese häufig nur für mittlere und kleinere Betriebe eingesetzt werden.

In anderen Strategien wird die Automatisierung einzelner Abschnitte des gesamten Melkvorgangs dort angewendet, wo sich eine gute Anpassung an den natürlichen Saugvorgang des Kalbes erreichen lässt, während andere Abschnitte des Melkvorgangs manuell oder zumindest unter Überwachung von Bedienpersonal ausgeführt werden. Beispielsweise kann die Sichtprüfung der Milch vor dem eigentlichen Melkvorgang in sehr effizienter Weise durch den Bediener erfolgen, der dann bei Bedarf auch eine geeignete Reinigung oder Desinfektion der Zitzen des Tieres durchführen und auch das Anlegen bzw. Ansetzen des Melkgeschirres vornehmen kann. Auch wird von dem Bediener eine Entscheidung getroffen, ob die Milch von der Konsummilch zu separieren ist. Auf diese Weise kann die Verwendung äußerst komplexer sensorischer Systeme und mechanischer Einrichtungen reduziert werden, die in vollautomatischen Melkanlagen einen wesentlichen Punkt für die hohen Investitionskosten und die Zuverlässigkeit der gesamten Anlage repräsentieren.

Nach dem manuellen Ansetzen des Melkgeschirrs kann eine geeignete Stimulationsphase folgen, die üblicherweise mittels des Melkgeschirrs und entsprechender Steuerungssysteme angewendet wird. Der eigentliche Melkvorgang wird sodann ebenfalls in gesteuerter Weise ohne zusätzliche Einwirkung des Bedienpersonals ausgeführt, wobei dies ebenfalls auf der Grundlage voreingestellter Steuerungsalgorithmen erfolgt. Beim Melkvorgang selbst wird unter den Zitzen ein geeignetes Melkvakuum angelegt, so dass die sich in den Zisternen in den Eutervierteln anreichernde Milch abgesaugt wird, wobei typischerweise abwechselnd eine Saugphase und eine Entlastungsphase vorgesehen wird. D. h., während der Saugphase wird Milch aus der Zitze, d.h. aus dem Strichkanal, über eine mit dem Zitzengummi verbundene oder als Teil des Zitzengummis ausgebildete Leitung abgesaugt und in einem geeigneten Auffangbehälter gesammelt, während in der Entlastungsphase typischerweise der Zwischenraum zwischen dem Zitzengummi und der Melkbecherwand mit einem mehr oder minder hohen Druck beaufschlagt wird, der wiederum zu einer Einfaltung des Zitzengummis und damit zu einer Abschnürung des Fluidwegs von der Zitze zum Sammelbehälter führt. Bei dieser Entlastungsphase ergibt sich somit auch eine mechanische Beaufschlagung der Zitze, die eine gewisse massierende Wirkung entfaltet und somit für den Melkvorgang eine wichtige Rolle spielt. Beispielsweise wird auch während der Entlastungsphase ein gewisser Rückstau an Körperflüssigkeiten in der Zitze verringert, so dass der Einfluss des Melkvakuums auf den Zustand der Zitze reduziert wird. Generell findet während des Melkvorgangs ein komplexes Zusammenspiel vieler Faktoren statt, etwa das Anregen der Ausschüttung gewisser Hormone, die wiederum dazu führen, dass die Alveolen Milch an die Zisternen abgeben, von denen dann die Milch über den Strichkanal der Zitze abgesaugt wird. Somit sind die Bedingungen während des Melkvorgangs, etwa die Art, die Häufigkeit und die Intensität der Stimulation während des Melkvorgangs, die Höhe des Melkvakuums, d.h., die Größe des Unterdrucks während der Saugphase, die Art der massierenden Wirkung während der Entlastungsphase und deren Dauer und dergleichen von großer Bedeutung, um einen konstant hohen Milchertrag bei jedem einzelnen Tier zu erhalten.

Bei den semiautomatisierten Milchviehbetrieben, die gewisse Handlungen während des Melkvorgangs durch Bediener erfordern, wie zuvor beschrieben ist, und besser geeignet sind als vollautomatisierte Anlagen, sehr große Tierbestände zu bewältigen, wird nach dem manuellen Ansetzen des Melkgeschirrs ebenfalls eine geeignete Stimulationsphase angewendet, wobei der weitere Verlauf, wie dies auch zuvor erläutert ist, im Wesentlichen vollautomatisiert abläuft. Während der Endphase des Melkvorgangs kann dann der Bediener überwachend und ggf. nach dem Abnehmen des Melkgeschirrs eingreifen und kann die Zitzen in geeigneter Weise behandeln, beispielsweise durch Reinigen oder Desinfizieren und dergleichen. Da insbesondere die kritischen Handlungen, etwa das Ansetzen des Melkgeschirrs, die Sichtprobe der anfänglich gemolkenen Milch und dergleichen durch Bediener erfolgt, können damit relativ große Tierbestände bearbeitet werden, wozu in der Regel mehrere Melkplätze vorgesehen sind, die das Melken mehrerer Tiere gleichzeitig erlauben, wobei zumindest während der kritischen Phasen der Bediener an dem jeweiligen Melkplatz vor Ort ist.

In derartigen Melkstationen, die mehrere Melkplätze aufweisen, wird häufig eine Anordnung vorgefunden, in der die Melkplätze hintereinander angeordnet sind und in direkter Verbindung mit einem entsprechenden Zugang stehen, über den Tiere in geeigneter Weise den einzelnen Melkplätzen zugeführt werden. Beispielsweise werden zu Beginn des Melkvorgangs die Tiere zum Betreten des Zugangs veranlasst und füllen nach und nach die einzelnen Melkplätze auf, wobei entsprechende Türen gesteuert geöffnet werden, so dass das nächst positionierte Tier den Melkplatz betreten kann. Wie zuvor erläutert ist, laufen die Melkvorgänge in den einzelnen Melkplätze tierspezifisch ab, so dass sich unterschiedliche Verweilzeiten in den Melkplätzen ergeben. Nach Beendigung eines Melkvorgangs verlässt das entsprechende Tier über den Zugang die Melkstation und der frei gewordene Melkplatz ist mit einem weiteren Tier zu besetzen. In effizienten konventionellen Melkstationen wird dazu gewährleistet, dass ein einen Melkplatz verlassendes Tier ungehindert abwandern kann und daraufhin ein entsprechendes Tor des Zugangs geöffnet wird, wodurch ein zu melkendes Tier zum Betreten des Zugangs veranlasst wird, um den freigewordenen Melkplatz einzunehmen. In dieser Konzeption wird somit nach dem Freiwerden eines Melkplatzes das Tor am Zugang für ein Tier freigegeben, so dass dieses ungehindert zu dem freigewordenen Melkplatz wandern kann. Auf diese Weise kann ein relativ ungehindertes Abwandern bereits fertig gemolkener Tiere und ein ungehindertes Zuwandern einer geeigneten Anzahl an zu melkenden Tieren über den Zugang der Melkstation sichergestellt werden.

Wenn eine größere Anzahl an hintereinander angeordneten Melkplätzen in einer Melkstation vorgesehen ist, um etwa einen größeren Tierbestand in kürzerer Zeit melken zu können, wächst jedoch auch die Zeitdauer an, die zum Besetzen wieder freiwerdender Melkplätze aufgrund der sehr geringen Schrittgeschwindigkeit der Tiere erforderlich ist, insbesondere in die von dem Zugangstor des Zugangs weiter wegliegenden Melkplätzen, so dass typischerweise ein Kompromiss zwischen der Anzahl der verfügbaren Melkplätze und dem Grad der gewünschten "Parallelität" beim Ausführen von Melkvorgängen vorgenommen werden muss.

Die Druckschrift EP 0657098 A1 zeigt einen Stall für Milchkühe mit mehreren Melkständen zum melken von Kühen mittels Melkrobotern. Hierbei ist eine Verarbeitungsvorrichtung vorgesehen, die aus Informationen bezüglich eines Milchflusses während des Melkens eines Tieres oder einer Gruppe von Tieren Daten ableitet, speichert und weiterverarbeitet, so dass mittels der Verarbeitungsvorrichtung Abweichung in den Daten bezüglich vorbestimmter Milchflusscharakteristiken eines bestimmten Tieres oder einer bestimmten Gruppe von Tieren bzw. Änderungen in den Milchflusscharakteristiken bestimmt werden. Die Verarbeitungsvorrichtung überwacht Abweichungen und Änderungen um den Reproduktionsstatus und/oder Gesundheitsstatus bestimmter Tiere zu überwachen.

Obwohl in der Agrarwirtschaft ein hoher Grad an Automatisierung bislang erreicht wurde und zu einer hohen Steigerung der Wirtschaftlichkeit dieser Agrarbetriebe bei der

Milchproduktion beigetragen hat, sind dennoch viele Vorgänge in einer Melkstation, insbesondere im Hinblick auf den Melkvorgang selbst und auch im Hinblick auf den Ablauf zur Zuführung und Abwanderung der Tiere in hohem Maße verbesserungsfähig, um zum einen insgesamt die Wirtschaftlichkeit zu erhöhen und zum anderen eine höhere Qualität der Milch und eine verbesserte Tiergesundheit zu erreichen.

Es ist daher eine Aufgabe der vorliegenden Erfindung, Mittel bereitzustellen, die die tierspezifischen Eigenschaften bei Handlungen in einer Melkstation, insbesondere beim Melken und/oder der Besetzung von Melkplätzen, besser berücksichtigen, um insgesamt die Qualität und die Effizienz bei vollautomatisierten und semiautomatisierten Melkstationen zu erhöhen.

Gemäß einem Aspekt der vorliegenden Erfindung wird diese Aufgabe gelöst durch ein Verfahren zum Betreiben einer Melkstation mit mehreren Melkplätzen. Das Verfahren umfasst ein Aufzeichnen von entsprechenden Messdaten für jedes von mehreren Tieren, wobei die entsprechenden Messdaten einen Milchfluss eines entsprechenden Tieres repräsentieren. Das Verfahren umfasst ferner ein Erzeugen eines individuellen Datensatzes für jedes der mehreren Tiere unter Anwendung der Messdaten, wobei der individuelle Datensatz einen erwarteten Milchfluss des entsprechenden Tieres angibt. Ferner umfasst das Verfahren einSteuern zumindest eines Teils eines Melkvorgangs der mehreren Tiere und eines Besetzens der mehreren Melkplätze durch die zu melkenden Tiere unter Verwendung der individuellen Datensätze des erwarteten Milchflusses für jedes der mehreren Tiere, wobei das Besetzen der mehreren Melkplätze gesteuert wird durch ein Ermitteln eines erwarteten Endes eines Melkvorgangs in den mehreren Melkplätzen

Der vorliegenden Erfindung liegt die Erkenntnis zu Grunde, dass tierspezifische Eigenschaften, insbesondere der Milchfluss der jeweiligen Tiere, effizient verwendet werden können, um insbesondere den Melkvorgang selbst und/oder das Betreiben von Melkstationen mit mehreren Melkplätzen zu verbessern. Der Milchfluss der Tiere beim Melken, d. h. der zeitliche Verlauf der Milchmenge während des Melkvorgangs, ist eine wichtige Größe, die Auskunft gibt über den aktuellen Status des Tieres und des Melkvorganges. Es zeigt sich, dass entsprechende Milchflussdaten in hohem Maße tierspezifisch sind, d. h. die Milchabgabe während der Melkvorgänge besitzt einen charakteristischen Verlauf, der von Tier zu Tier unterschiedlich ist, da sich hier auf Grund der generellen Komplexität des Melkvorgangs tierspezifische Eigenschaften widerspiegeln. Dieser charakteristische Verlauf beim Milchentzug während eines Melkvorgangs bleibt auch über längere Zeiträume hinweg relativ konstant, etwa wie ein "Fingerabdruck", wobei typischerweise trotzdem eine gewisse Variabilität auftritt während der gesamten Laktationszeit, die beispielsweise zu einer etwas höheren Milchmenge während des Beginns der Laktationszeit und zu einer etwas geringeren Milchmenge während des Endes der Laktationszeit führt. Erfindungsgemäß werden daher die Milchflussdaten, beispielsweise in Form von Milchflusskurven, oder in Form anderer Daten, die die Milchmenge über die Zeit hinweg während eines Melkvorganges beschreiben, aufgezeichnet und verwendet, um damit entsprechende individuelle Datensätze zu erzeugen, die das "aktuelle" Melkverhalten eines speziellen Tieres angeben. D. h., der individuelle Datensatz kann als ein "Modell" des Melkvorgangs für das betrachtete Tier verstanden werden, da aus den zuvor ermittelten Messdaten die tierspezifischen Eigenschaften, die sich in den aufgezeichneten Milchflussdaten widerspiegeln, in geeigneter Weise in dem individuellen Datensatz enthalten sind. Da somit das Verhalten des Tieres während eines Melkvorganges mit guter Genauigkeit durch den zugehörigen individuellen Datensatz "vorhergesagt" werden kann, kann damit ein entsprechender automatisierter Vorgang in der Melkstation während des eigentlichen Melkvorgangs und/oder während des Besetzens der Melkplätze, wenn mehrere Melkplätze vorgesehen sind, sehr effizient gesteuert werden. Beispielsweise lassen sich in relativ präziser Weise bereits zu Beginn eines Melkvorgangs dessen Dauer und der Verlauf vorhersagen, so dass insbesondere beim Melkvorgang selbst geeignete Prozessparameter, etwa das Melkvakuum, Stimulationsparameter, und dergleichen entsprechend für jedes Tier individuell angepasst werden. Auch kann der vorbekannte Verlauf des Melkvorgangs auf Grund der individuellen Datensätze effizient ausgenutzt werden, um eine verbesserte Strategie zu implementieren, in der zu melkende Tiere für die Besetzung der freiwerdenden Melkplätze geeignet positioniert werden.

Wie eingangs erläutert ist, hängt die Effizienz von Melkstationen auch kritisch davon ab, wie schnell frei werdende Melkplätze wieder durch ein zu melkendes Tier besetzt werden können. In diesem Zusammenhang wurde erfindungsgemäß erkannt, dass vorausschauende Milchflussdaten sehr effizient eingesetzt werden können, um eine Erhöhung der Effizienz bei der Besetzung der Melkplätze zu erreichen. Zu diesem Zweck wird eben das Ende des Melkvorgangs ermittelt, wobei dies in einigen Ausführungsformen auch unter weiterer Berücksichtigung der aktuellen Milchflussdaten erfolgen kann, so dass der ermittelte Zeitpunkt des Endes des Melkvorganges sodann genutzt werden kann, um entsprechende Maßnahmen für die Positionierung eines Tieres durchzuführen.

In einer vorteilhaften Ausführungsform umfasst das Steuern zumindest eines Teils des Melkvorgangs und/oder eines Besetzens des einen oder der mehreren Melkplätze durch zu melkende Tiere: Erfassen von aktuellen Messdaten, die einen aktuellen Milchfluss während des Melkvorgangs repräsentieren, und Vergleichen der aktuellen Messdaten mit dem aktuell verwendeten individuellen Datensatz.

In diesen vorteilhaften Ausführungsformen wird der aktuelle Milchfluss während eines gerade ablaufenden Melkvorgangs erfasst, der dann auch aufgezeichnet werden kann und später zur Erzeugung und Optimierung des zugehörigen individuellen Datensatzes verwendbar ist. Nach der Erfassung erfolgt ein Vergleich mit dem vorhergesagten Verhalten des Tieres während des Melkvorgangs, um auf der Grundlage des Vergleichs ggf. geeignete Steuerungsparameter neu anzupassen. Zwar gibt es in konventionellen Agrarbetrieben häufig eine Überwachung des Milchflusses, die ggf. auch zur Beeinflussung gewisser Steuerungsparameter führt, jedoch ist es in diesen Strategien nicht möglich, Abweichungen vom erwarteten Verhalten des Tieres in genauer Weise zu erkennen. Beispielsweise kann auf Grund der Erkenntnis der Milchmenge zu einem gewissen Zeitpunkt zwar eine gewisse Überwachung und ggf. auch ein gewisser Grad an Steuerung bewerkstelligt werden, jedoch ist auf Grund der bis zu diesem Zeitpunkt ermittelten Messwerte in konventionellen Strategien nicht erkennbar, inwieweit bereits eine Abweichung vom erwarteten Melkverhalten vorliegt und insbesondere welches Verhalten in der folgenden Phase des Melkvorgangs zu erwarten ist. Demgegenüber kann auf der Grundlage der individuellen Datensätze im Zusammenhang mit den aktuell ermittelten Milchflussmessdaten stets erkannt werden, in welcher Phase des Melkvorgangs sich das Tier befindet, und es können entsprechende Steuerungsmaßnahmen auch vorausschauend vorgenommen werden, da insbesondere auch der weitere Verlauf des Melkvorganges mit einem hohen Grad an statistischer Signifikanz bekannt ist und damit geeignete Steuerungsmaßnahmen, beispielsweise die Änderung des Melkvakuums, und dergleichen, effizient anwendbar sind.

In einer weiteren vorteilhaften Ausführungsform umfasst das Verfahren das Aufzeichnen der aktuellen Messdaten als Teil der entsprechenden Messdaten zur Erzeugung eines individuellen Datensatzes für jedes der mehreren Tiere. Auf diese Weise werden die aktuellen Messdaten auch gleichzeitig als "historische" Daten für künftige Melkvorgänge bewahrt und können insbesondere einen hohen Grad an Authentizität zwischen dem aktuellen tatsächlichen Melkverhalten und den aus den Messdaten erzeugten individuellen Datensätzen sicherstellen. Wie zuvor bereits erwähnt ist, ist das Melkverhalten zwar über lange Zeit relativ konstant, wobei sich aber dennoch gewisse Schwankungen ergeben können im Lauf der gesamten Laktationszeit, die zu einer graduellen Änderung des Verlaufs der Milchflusskurve, also deren Form, und insbesondere auch zu einer Änderung der Gesamtmilchmenge pro Melkvorgang führen können. Durch das Berücksichtigen der jüngsten Milchflussdaten kann somit jeder individuelle Datensatz aktuell gehalten werden und passt sich somit in automatischer Weise einem sich graduell ändernden Verhalten des Tieres an. Zu diesem Zweck können die gemessenen Milchflussdaten in geeigneter Weise aufbereitet werden, beispielsweise mittels geeigneter statistischer Verfahren, etwa einem exponentiell gewichteten gleitenden Mittelwert (EGGM), wobei durch geeignete Wahl der Parameter eine entsprechende Gewichtung von jüngeren oder älteren Messdaten vorgenommen werden kann. Somit kann mittels des EGGM eine stärkere Gewichtung der jüngsten Milchflussdaten folgen, so dass eine bessere Adaption der individuellen Datensätze an das aktuelle Melkverhalten des Tieres erfolgt, ohne dass jedoch die weiter zurückliegende Historie des entsprechenden Tieres vernachlässigt wird. Des weiteren können andere "Modelle" des Melkvorgangs verwendet werden, beispielsweise durch Verwendung einer Vielzahl historischer Messdaten, etwa auch von unterschiedlichen Tieren, um generell gewisse allgemeine Entwicklungen im Melkverhalten zu berücksichtigen, die etwa auf die Jahreszeit, die Art der Fütterung und dergleichen zurückzuführen sind, so dass derartige generelle Tendenzen mittels entsprechender Korrekturfaktoren in den einzelnen Datensätzen berücksichtigt werden können. Beispielsweise kann bei einer bereits bekannten absehbaren Umstellung in der Tierhaltung, etwa auf Grund einer Futterumstellung, eine entsprechende Korrektur an jedem individuellen Datensatz auf der Grundlage vieler statistisch signifikanter Messdaten vorgenommen werden, so dass zeitnah eine entsprechende Korrektur in den individuellen Datensätzen erfolgt, die ansonsten auf Grund der automatischen Adaption mittels der aktuellen Milchflussdaten einen längeren Zeitraum benötigen würde. Auf diese Weise kann die Zuverlässigkeit der Vorhersage, die sich auf Grund der individuellen Datensätze ergibt, weiter verbessert werden.

In einer weiteren anschaulichen Ausführungsform wird ein Teil des Melkvorgangs für jedes der mehreren Tiere gesteuert durch Steuern eines aktuellen Melkvakuums und/oder einer Stimulation und/oder es wird eine Unregelmäßigkeit im Melkvorgang automatisch erkannt. Wie zuvor erläutert ist, ist der Melkvorgang selbst ein sehr komplexer Prozess, wobei ein wichtiger Parameter die Höhe des Melkvakuums ist, d. h. die Größe des Unterdrucks, der an der Zitze während des Melkvorgangs anliegt. Häufig wird ein relativ konstantes Melkvakuum angelegt, das ggf. temporär variiert wird, etwa kurz vor Einfalten des Zitzengummis zu Beginn der Entlastungsphase, und dergleichen, wobei jedoch die Höhe des Melkvakuums nicht notwendiger Weise ideal ist für jede Phase des Melkvorgangs. Beispielsweise ist während einer Phase, in der ein relativ hoher Milchfluss erwartet wird, ggf. ein höheres Vakuum vorzusehen, da dann eine relativ hohe Milchmenge in kurzer Zeit abgeführt werden muss. Andererseits ist es nicht notwendig, in Phasen eines geringeren Milchflusses das relativ hohe Melkvakuum aufrecht zu erhalten, das auch einen entscheidenden Einfluss auf die Zitze des Tieres und damit generell auf das Melkverhalten des Tieres ausübt. Durch die "vorausschauenden" individuellen Datensätze lassen sich somit entsprechende Phasen hohen und niedrigen Milchflusses bereits im Voraus erkennen, so dass eine dazu angepasste Steuerung des Melkvakuums ermöglicht wird. Beispielsweise kann auf der Grundlage der vorausschauenden individuellen Datensätze eine geeignete Steuerkurve für das Melkvakuum über die Zeit hinweg angewendet werden, um damit mechanische Einwirkungen des Unterdrucks auf die Zitze zu verringern. In anderen anschaulichen Ausführungsformen wird zusätzlich der aktuelle Milchfluss gemessen, so dass die aktuelle Milchmenge eindeutig einer gewissen Phase der Milchflusskurve zugeordnet werden kann, wobei auch bei Bedarf mögliche Abweichungen effizient detektiert werden können. Auf Grund des Vergleichs der aktuellen Milchmenge mit den vorausschauenden Milchflussdaten der individuellen Datensätze kann somit in noch effizienterer Weise eine Anpassung des Melkvakuums erfolgen, da beispielsweise ein gewisser zeitlicher Versatz zwischen dem aktuellen Verhalten und dem vorausgesagten Verhalten, etwa wenn der Beginn des Melkvorgangs nicht exakt ermittelt wurde, bestimmbar ist und somit dennoch eine gewünschte Modulation des Melkvakuums erfolgen kann. Bei der gleichzeitigen Erfassung der aktuellen Durchflussdaten können auch gewisse Ausnahmesituationen zuverlässig erkannt werden, etwa das Abfallen eines Melkbechers, und dergleichen, woraus aus den vorausschauenden Milchflussdaten nach erfolgter Behebung des Fehlers der weitere Verlauf erneut ermitteln lässt und damit eine geeignete Anpassung der Melkbedingungen durchgeführt werden kann.

Zusätzlich oder alternativ zur Steuerung des Melkvakuums auf der Grundlage zumindest der vorausschauenden individuellen Datensätze kann auch die Stimulation gesteuert werden, da eben gewisse mechanische Stimuli abgestimmt zu dem Verhalten des jeweiligen Tieres angewendet werden können. Zwar gibt es konventioneller Weise bereits Ansätze, in denen die Stimulation beim Melkvorgang entsprechend variiert wird, jedoch findet dies nicht in tierindividueller Weise statt und kann damit sogar für gewisse Tiere kontraproduktiv sein. Auf Grund der vorausschauenden Milchflussdaten kann jedoch beispielsweise der Zeitpunkt, aber auch die Intensität oder die Art der Stimulation, individuell festgelegt werden, so dass sich insgesamt langfristig eine höhere Tiergesundheit und/oder ein höherer Milchertrag ergeben. Auch in diesem Zusammenhang ist es besonders vorteilhaft, zusätzlich auch die aktuellen Milchflussdaten bei der Steuerung der Stimulation zu berücksichtigen, da auch in diesem Falle der Vergleich des tatsächlichen Verlaufes mit dem erwarteten Verlauf zu einer verbesserten Korrelation der entsprechenden Steuerungsaktivitäten in Bezug auf das gerade betrachtete Tier führt.

Zusätzlich oder alternativ zu den zuvor genannten Maßnahmen kann bei gleichzeitiger Messung der aktuellen Milchflussdaten eine Unregelmäßigkeit im Melkvorgang zuverlässig ohne weiteren Geräteaufwand erkannt werden, so dass dann geeignete Maßnahmen durch die Steuereinheit veranlasst werden können. So kann die Steuereinheit ein Warnsignal mittels einer entsprechenden Warnvorrichtung ausgeben, die von einem Bediener erkannt wird. In vollautomatisierten System gibt die Steuereinheit entsprechende Steuersignale aus, um geeignete Korrekturmaßnahmen in Gang zu setzen, etwa das Wiederansetzen eines oder mehrerer Melkbecher, wenn die Unregelmäßigkeit durch Abfallen eines oder mehrerer Melkbecher hervorgerufen wurde. Zudem für diesen Fall das Melkvakuum geeignet gesteuert werden.

In einer weiteren vorteilhaften Ausführungsform wird der Melkvorgang vollständig automatisiert ausgeführt. In diesem Verfahren können beispielsweise geeignet automatisierte Melkstationen verwendet werden, in denen etwa ein Melkroboter eingesetzt wird, der beispielsweise das Ansetzen und Abnehmen des Melkgeschirrs ebenfalls in automatisierter Weise durchführt. Auf Grund der vorausschauenden Milchflussdaten kann jedoch hier eine deutliche Steigerung der Effizienz erreicht werden, da etwa die Stimulation individuell ausgeführt wird, so dass sich der gesamte Melkvorgang störungsarmer durchführen lässt und ggf. auch die Milchmenge erhöht wird. Auch trägt die individuelle Anpassung der Melkparameter, etwa des Melkvakuums dazu bei, die Tiergesundheit zu verbessern und/oder den gesamten Milchertrag zu erhöhen.

Insbesondere bei der Verwendung vollautomatisierter Melkanlagen ergibt sich in einfacher Weise die Möglichkeit, die Kategorisierung der Milchflussdaten weiter zu verfeinern, so dass etwa einzelne Euterviertel der Tiere als separate Datensätze verwendet werden, da bei vollautomatisierten Anlagen in der Regel eine getrennte Steuerung der Euterviertel erfolgen kann und auch das Anlegen der Melkbecher in einer genau standardisierten und reproduzierbaren Weise abläuft, so dass auch über längere Zeiträume hinweg bekannt ist, welche Milchflussdaten von welchem Eutervierteil erzeugt wurden. Eine derartige Verfeinerung der Kategorisierung der Milchflussdaten kann auch in semiautomatisierten Betrieben durchgeführt werden, sofern eine viertelspezifische Ableitung der Milch erfolgt und beim manuellen Ansetzen der Melkgeschirre ein gewisses standardisiertes Verfahren angewendet wird, so dass die Zuordnung zwischen Milchflüssen und Eutervierteln auch über längere Zeiträume hinweg korrekt bleibt.

In weiteren Ausführungsformen wird ein Melkgeschirr manuell angelegt, wobei ggf. eine Steuerung des Melkvorgangs auch dadurch erfolgen kann, dass gewisse Signale einem Bediener zur Kenntnisnahme gebracht werden, um auf Grund des vorausschauenden Melkverhaltens des jeweiligen Tieres auch in nicht automatisierten Phasen des Melkvorganges eine höhere Effizienz zu erreichen.

In einer weiteren vorteilhaften Ausführungsform wird ein zu melkendes Tier in einem Zugang, der in direkter Verbindung mit dem einen oder den mehreren Melkplätzen steht, positioniert, bevor einer oder mehrere der Melkplätze nach Beendigung eines Melkvorgangs darin frei wird. Wie einleitend erläutert ist, insbesondere bei Melkstationen, in denen mehrere Melkplätze hintereinander angeordnet sind, ist das Zuwandern eines zu melkenden Tieres zu einem frei werdenden Melkplatz unter Umständen ein sehr zeitraubender Vorgang, insbesondere wenn die Melkplätze betrachtet werden, die von dem zentralen Zugangstor weit entfernt sind. D. h., typischerweise wird in konventionellen Verfahren das Tor zum Zugang geöffnet, sobald ein entsprechender Melkplatz frei wurde. Daraufhin muss das entsprechende Tier die gesamte Strecke bis zu dem frei gewordenen Melkplatz überbrücken, was je nach Strecke und auch je nach Mentalität des Tieres einen relativ langen Zeitraum von 30 Sekunden oder deutlich länger erfordern kann, wobei in dieser Zeit der frei gewordene Melkplatz nicht genutzt wird und die Gesamteffizienz der Melkstation verringert. Durch Ermitteln des erwarteten Endzeitpunkts an den jeweiligen Melkplätzen kann somit festgestellt werden, welcher Melkplatz als nächstes frei wird und ein neu zu melkendes Tier kann bereits in den Zugang eingeführt werden, bevor der nachfolgend frei werdende Melkplatz von dem darin befindlichen Tier verlassen wurde. Auf diese Weise kann die Zeitdauer zum "erneuten Befüllen" des frei werdenden Melkplatzes insbesondere für weit entfernte Melkplätze deutlich verringert werden.

In einer weiteren vorteilhaften Ausführungsform wird das zu melkende Tier mittels einer Führungsvorrichtung in dem Zugang positioniert. Auf diese Weise wird die "Positionierung" des neu zu melkenden Tieres in dem Zugang zu einem gewissen Grade entkoppelt von den Eigenschaften des Tieres, beispielsweise dessen "mentaler" Verfassung, und dergleichen, da die Führungsvorrichtung in einer gewissen Weise regulierend auf das Tier einwirken kann. Beispielsweise kann die Führungsvorrichtung einen Einfluss auf die Schrittgeschwindigkeit des Tieres ausüben, so dass eine gewisse "Standardisierung" des Bewegungsverhaltens der zu melkenden Tiere erreicht wird, so dass sich auf diese Weise die "Beschickung" des Zugangs weiter optimieren lässt. Beispielsweise kann mittels der Führungsvorrichtung auf der Grundlage des ermittelten erwarteten Endes des Melkvorganges das neue Tier mit einer gewissen Geschwindigkeit losgeschickt werden, die durch die Führungsvorrichtung vorgegeben ist, so dass sich die Ankunftszeit relativ genau vorherbestimmen lässt. Zu diesem Zweck kann etwa ein Futternapf, der in dem Zugang verfahrbar ist, verwendet werden, um das Tier zu einer gewünschten Geschwindigkeit zu animieren, während in anderen Fällen andere Reize ausgeübt werden können.

In einer weiteren vorteilhaften Ausführungsform wird das zu melkende Tier in einer Warteposition unmittelbar vor einem der mehreren Melkplätze angeordnet, der als der nächste frei werdende Melkplatz auf der Grundlage der individuellen Datensätze bestimmt wird. In dieser Ausführungsform wird also der Zugang als eine "Wartezone" verwendet, wobei jedoch die Warteposition in Korrelation mit den vorausschauenden Datensätzen ermittelt wird, so dass bei Ende des Melkvorganges praktisch keine Strecken in dem Zugang zurückzulegen sind, so dass damit der frei werdende Melkplatz ohne wesentliche Verzögerungen neu besetzt wird. Beispielsweise kann sobald ein wartendes Tier aus dem Zugang in einen entsprechenden frei gewordenen Melkplatz abgewandert ist, der Zugang erneut mit einem Tier beschickt werden, wobei die Warteposition dann gemäß dem vorausschauenden Datensätzen und ggf. gemäß den aktuellen Milchflussdaten festgelegt wird.

In einer weiteren vorteilhaften Ausführungsform umfasst das Verfahren das Ermitteln der Identität eines zu melkenden Tieres vor dessen Positionierung in dem Zugang. Durch die Feststellung der Tieridentität bereits vor Einbringen des Tieres in den Zugang können neben den vorausschauenden Milchflussdaten auch andere tierspezifische Eigenschaften aus einer geeigneten Datenbank abgerufen werden, die etwa Aussagen über die Mentalität des Tieres geben, etwa dessen Bewegungsdranges, etc., so dass auf Grund dieser zusätzlichen Information das Einbringen des Tieres in den Zugang gesteuert werden kann. Beispielsweise kann bei einem Tier, dessen Bewegungsdrang relativ hoch ist, von einer höheren Schrittgeschwindigkeit ausgegangen werden, so dass ggf. eine geringere Verweilzeit in dem Zugang ausreichend ist. Dies kann beispielsweise vorteilhaft sein in Ausführungsformen, in denen keine steuerbar aktivierbaren Warteplätze in dem Zugang bereitgestellt werden, so dass die Tiere veranlasst werden so in den Zugang einzuwandern, dass diese bei der erwarteten Schrittgeschwindigkeit den nächsten frei werdenden Melkplatz erreichen, sobald dieser frei geworden ist.

Gemäß einem weiteren Aspekt der vorliegenden Erfindung wird die Aufgabe gelöst durch eine Melkstation, die mehrere Melkplätze aufweist, die ausgebildet sind, einen zumindest phasenweise automatisierten Melkvorgang auszuführen. Die Melkstation umfasst ferner eine Sensoreinrichtung, die ausgebildet ist, in jedem der mehreren Melkplätze Messdaten zu erfassen, die den Milchfluss während des Melkvorganges repräsentieren. Des weiteren umfasst die Melkstation eine Datenverarbeitungseinheit, die mit der Sensoreinrichtung koppelbar und ausgebildet ist, aus den Messdaten einen individuellen Datensatz für jedes gemolkene Tier zu erzeugen, wobei der individuelle Datensatz eine erwartete Milchflusskurve repräsentiert. Die Melkstation umfasst ferner eine Steuereinheit, die mit der Datenverarbeitungseinheit in Funktionsverbindung steht und ausgebildet ist, Steuersignale zur Steuerung des Melkvorganges und zur Steuerung des Besetzens der mehreren Melkplätze durch ein nächstes zu melkendes Tier unter Verwendung der individuellen Datensätze bereitzustellen. Hierbei wird das Besetzen der mehreren Melkplätze durch eine Ermittlung eines erwarteten Endes eines Melkvorgangs in den mehreren Melkplätzen gesteuert.

Wie bereits zuvor dargelegt ist, kann in der erfindungsgemäßen Melkstation eine geeignete Kategorisierung von Messdaten erfolgen, die das Melkverhalten und damit den Milchfluss der einzelnen Tiere repräsentieren. Je nach Auslegung der Sensoreinrichtung und der angewendeten Melkstrategie kann die Kategorisierung für einzelne Tiere oder auch für einzelne Bereiche, etwa einzelne Euterviertel erfolgen, so dass die Historie des Melkverhaltens mit einer gewünschten Auflösbarkeit und über einen gewünschten zeitlichen Horizont möglich ist. Bei der Verarbeitung der Messdaten werden somit geeignete Maßnahmen vorgesehen, um ein repräsentatives Modell des Melkvorgangs für jedes einzelne Tier zu erzeugen, aus dem dann wiederum mittels der Steuereinheit gewisse Steueraktivitäten durch die bereitgestellten Steuersignale initiiert werden können. Bei der Datenverarbeitung können ferner effizient geeignete "Referenzdaten" aus den Messdaten ausgewählt werden, um das tierindividuelle Melkverhalten möglichst genau nachzubilden, indem etwa "unzulässige" Daten nicht berücksichtigt oder nur mit geringerer Priorität berücksichtigt werden. Beispielsweise kann den Messdaten eine Zusatzinformation zugeordnet sein, die etwa Unregelmäßigkeiten beim Melkvorgang kennzeichnet, etwa das Abfallen eines Melkbechers, und dergleichen, so dass die entsprechenden Messdaten ggf. nicht berücksichtigt werden, da diese keinen repräsentativen Melkvorgang beschreiben. Das Aussondern gewisser unzulässiger Messdaten kann auch in automatisierter Weise in der Datenverarbeitungseinheit erfolgen anhand gewisser Eigenschaften des Melkvorgangs selbst, ohne dass ggf. eine Zusatzinformation erforderlich ist. Zu diesem Zweck können etwa die Zeitdauer des Melkvorgangs oder auch ungewöhnliche Maxima und Minima in der Milchflusskurve verwendet werden, um die Authentizität der vorliegenden Messdaten für den in Betracht gezogenen Melkvorgang zu verifizieren. Beispielsweise kann eine verlängerte Melkdauer im Zusammenhang mit einem außergewöhnlichen Absinken der Milchmenge während eines gewissen Zeitintervalls darauf hindeuten, dass eine ungewöhnliche Unregelmäßigkeit vorlag, etwa das Abfallen eines Melkbechers und dergleichen, so dass diese Daten ausgesondert werden, wenn ein repräsentativer Datensatz erzeugt wird, der das aktuelle Melkverhalten des betrachteten Tieres vorausschauend beschreiben soll.

Die von der Steuereinheit auf Grund der tierindividuellen Datensätze erzeugten Steuersignale werden dann erfindungsgemäß zur Steuerung des Melkvorganges selbst und/oder zur effizienten Beschickung der Melkplätze, falls mehrere Melkplätze vorgesehen sind, verwendet, wobei auch weitere Betriebsvorgänge in der Melkstation zusätzlich zu den vorgenannten Steuerungsaktivitäten vorgenommen werden können. Die Steuersignale werden also auf der Grundlage des aktuellen erwarteten Melkverhaltens eines jeden Tieres erzeugt und bieten damit ein "vorausschauendes" Steuerverhalten, in welchem nicht nur auf mögliche gerade erfassten Vorgängen im Melkvorgang reagiert wird, wie dies etwa bei modernen konventionellen Anlagen mit Milchfluss gesteuerter Regelung der Fall ist, sondern auch ein vorausschauendes Eingreifen der Steuerung möglich ist, so dass sich dadurch ein wesentlich effizienteres Betriebsverhalten der Melkstation erreichen lässt.

In einer weiteren vorteilhaften Ausführungsform steht die Steuereinheit ferner mit der Sensoreinrichtung in Funktionsverbindung, so dass aktuelle Messdaten bei einem Melkvorgang durch die Steuereinheit abrufbar sind, wobei die Steuereinheit ferner ausgebildet ist, die Steuersignale unter Verwendung der aktuellen Messdaten bereitzustellen. Durch diesen Aufbau der Melkstationen kann einerseits das aktuelle Melkverhalten erfasst werden, und ggf. auch für die Aktualisierung des individuellen Datensatzes verwendet werden, und andererseits ergibt sich dadurch die Möglichkeit, einen Vergleich zwischen dem aktuellen Verhalten, d. h. Milchfluss, und dem erwarteten Milchfluss vorzunehmen, so dass der genaue Status des Melkvorganges zu jedem Zeitpunkt bekannt ist. D. h., es wird ein "normaler" Status ermittelt, wenn nur geringfügige Abweichungen zum erwarteten Milchfluss vorhanden sind, wobei damit auch der genaue zeitliche Verlauf des weiteren Melkvorgangs vorhergesagt werden kann und damit sehr effiziente Möglichkeiten bestehen in vorausschauender Weise in den Steuerungsablauf einzugreifen. In anderen Fällen kann eine Unregelmäßigkeit im Melkvorgang präzise detektiert werden, wenn eine unerwartet große Abweichung zum erwarteten Melkverhalten erkannt wird.

In einer weiteren vorteilhaften Ausführungsform ist die Steuereinheit ausgebildet, Steuersignale für die Positionierung des nächsten zu melkenden Tieres so bereitzustellen, dass dieses in einem Zugang, der in direkter Verbindung zu jedem der mehreren Melkplätze steht, positioniert wird, bevor ein nächster Melkplatz frei wird. Wie dies bereits auch zuvor beschrieben ist, kann dadurch eine wesentliche Effizienzsteigerung einer Melkstation mit mehreren angeordneten Melkplätzen erreicht werden, da die Wartezeiten zum Wiederauffüllen eines freiwerdenden Melkplatzes deutlich verringert werden im Vergleich zu konventionellen Strategien.

In einer weiteren vorteilhaften Ausführungsform weist die Melkstation eine durch die Steuersignale steuerbare Führungsvorrichtung auf, die zur Positionierung des nächsten zu melkenden Tieres in dem Zugang verwendet wird. Durch die Führungsvorrichtung ist ein effizientes Mittel in der Melkstation vorgesehen, um die Besetzung des Zugangs mit einem nächsten zu melkenden Tier effizient zu koordinieren, ohne dass die Gefahr einer Staubildung entsteht. Beispielsweise kann mittels der Führungsvorrichtung ggf. die Schrittgeschwindigkeit des eintretenden Tieres in geeigneter Weise gesteuert werden, so dass die erforderliche Zeit zur Bewältigung der Strecke bis zum nächsten frei werdenden Melkplatz in gut definierter Weise vorher bestimmbar ist. In anderen vorteilhaften Ausführungsformen weist die Führungsvorrichtung eine steuerbar aktivierbare Barriere auf. Mittels dieser Barriere kann somit die Position des neu zu melkenden Tieres eindeutig festgelegt werden, so dass damit stets ein gut definierter Betriebszustand in der Melkstation bei der Zuführung neuer Tiere und dem Abwandern der bereits gemolkenen Tiere aufrecht erhalten wird.

In einer weiteren vorteilhaften Ausführungsform ist zumindest einigen der mehreren Melkplätze eine steuerbar aktivierbare Barriere zugeordnet, so dass durch die jeweils zugeordnete steuerbar aktivierbare Barriere ein Wartebereich für jeden der mindestens einigen der mehreren Melkplätze benachbart zu dem jeweiligen Melkplatz temporär erzeugbar ist. Auf diese Weise kann ein neu zu melkendes Tier in eindeutiger Weise in dem Zugang positioniert werden, und zwar in unmittelbarer Nachbarschaft zu dem Melkplatz, von dem erwartet wird, dass er als nächstes frei wird. Dadurch wird ein sehr schneller Wechsel in dem betreffenden Melkplatz erreicht, ohne dass im Wesentlichen eine Beeinflussung durch tierspezifische Eigenarten stattfindet, etwa durch eine geringere Schrittgeschwindigkeit, und dergleichen. Beispielsweise kann prinzipiell bei Freiwerden zumindest eines Teils des Zugangs ein weiteres Tier in den Zugang geschickt werden, wobei dann die melkplatzspezifische Barriere aktiviert wird, um somit eine genau definierte Warteposition zu vorzugeben.

In einer vorteilhaften Ausführungsform umfasst die Führungsvorrichtung einen steuerbar aktivierbaren Futterspender. Damit kann in einer für das Tier angenehmen Weise eine effektive Steuerung des Tierverhaltens, beispielsweise eine Steuerung der Schrittgeschwindigkeit, ein Definieren einer Warteposition, und dergleichen erreicht werden.

In einer weiteren vorteilhaften Ausführungsform sind die mehreren Melkplätze vollautomatisierte Melkplätze. In diesen Ausführungsformen findet also der gesamte Melkvorgang in automatisierter Weise statt, wobei eben durch die erfindungsgemäße vorausschauende Steuerungsmöglichkeit eine deutliche Effizienzsteigerung im Vergleich zu konventionellen vollautomatisierten Systemen erreicht wird. Beispielsweise kann auf diese Weise der Mangel im Hinblick auf eine tieroptimale Stimulation auf Grund des Fehlens der Einwirkung eines Bedieners kompensiert oder überkompensiert werden, da sehr präzise tierspezifische Stimulationszeitpunkte und Stimulationsarten ausgewählt werden können, so dass insgesamt der Melkvorgang für das Tier in einer tiergerechteren Weise abläuft und damit höhere Milcherträge und eine verbesserte Tiergesundheit auch in vollautomatisierten Melkstationen möglich sind.

In einer weiteren vorteilhaften Ausführungsform sind der eine oder die mehreren Melkplätze für ein manuelles Ansetzen eines Melkgeschirrs ausgebildet. Auch in diesem Falle führt die vorausschauende Steuerungsstrategie der vorliegenden Erfindung zu einer deutlichen Verbesserung der Gesamtsituation beim Betreiben der Melkstation, da die automatisierten Phasen des Melkvorgangs und/oder der Ablauf beim Besetzen der einzelnen Melkplätze verbessert wird, wie dies auch zuvor dargelegt ist. Beispielsweise kann in größeren Agrarbetrieben, in denen die Melkstation relativ viele Melkplätze aufweist, alleine durch die höhere Effizienz bei der Besetzung der frei werdenden Melkplätze der Durchsatz deutlich gesteigert werden, ohne dass zusätzlicher kostenintensiver Aufwand für das Einrichten zusätzlicher Melkplätze erforderlich ist. In weiteren vorteilhaften Ausführungsformen ist ferner eine durch die Steuereinheit gesteuerte Transporteinrichtung zum Transport eines Bedieners und/oder einer Vorrichtung zur automatischen Anrüstung eines Melkgeschirrs vorgesehen, so dass im Zusammenwirken mit einer vorausschauend gesteuerten Besetzung der Melkplätze und/oder einer vorausschauend gesteuerten Phase des Melkvorganges ein weiterer vorteilhafter Effekt erreicht wird, da eine deutliche Steigerung der Wirksamkeit der Transporteinrichtung erreicht wird. Beispielsweise kann in diesem Falle der zeitliche Verlauf des Melkvorganges vorausschauend mit hoher Genauigkeit vorherbestimmt werden, so dass damit geeignete Zeitpunkte ermittelt werden können, um damit den Bediener oder die Vorrichtung mittels der Transporteinrichtung an einem jeweiligen Melkplatz zu positionieren.

In einer weiteren vorteilhaften Ausführungsform ist die Melkstation ausgebildet, ein Melkvakuum und/oder eine Stimulationseinrichtung durch die Steuersignale der Steuereinheit zu steuern. Wie dies bereits zuvor dargelegt ist, kann damit eine deutliche Verbesserung zumindest des Wohlbefindens des Tieres während des Melkvorgangs erreicht werden, was sich langfristig in einer besseren Tiergesundheit und einem höheren Milchertrag widerspiegelt. Diese langfristige Änderung, also Verbesserung, des Melkverhaltens wird jedoch auch gleichzeitig effizient in die tierindividuellen Datensätze abgebildet, so dass eine langfristige Änderung des Melkverhaltens, die zu einer Verbesserung der Gesamtsituation des Tieres führt, mittels der entsprechend nachgebildeten individuellen Tierdatensätze zu einem "selbstoptimierenden" Verhalten führt.

Mit Bezug zu den begleitenden Zeichnungen werden nunmehr weitere Ausführungsformen detaillierter dargestellt. In den Figuren zeigen:

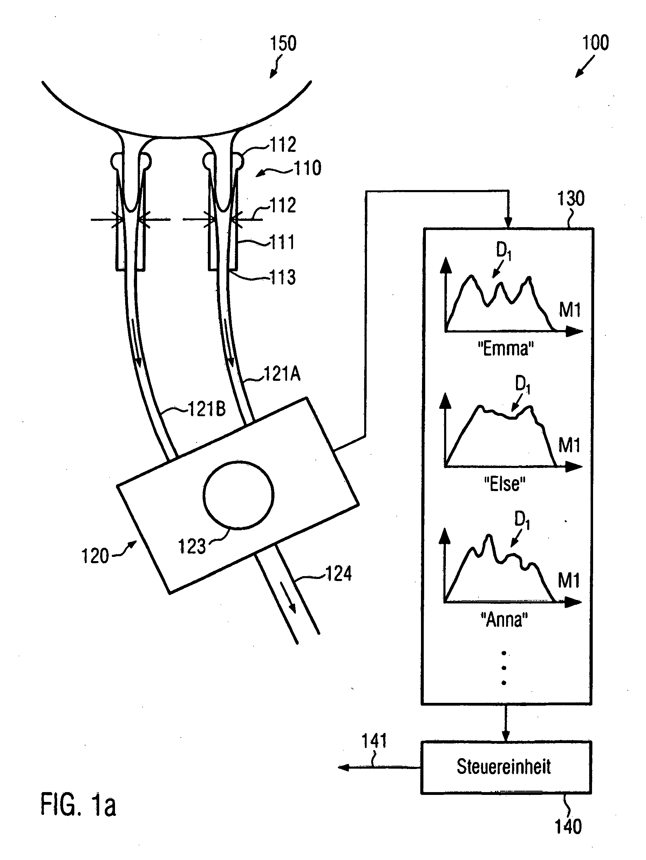

Fig. 1a einen Teil einer Melkstation während eines Melkvorgangs, in welchem Messdaten erfasst werden und zu einem individuellen Datensatz zur Beschreibung des Milchflusses eines Tieres verarbeitet werden,

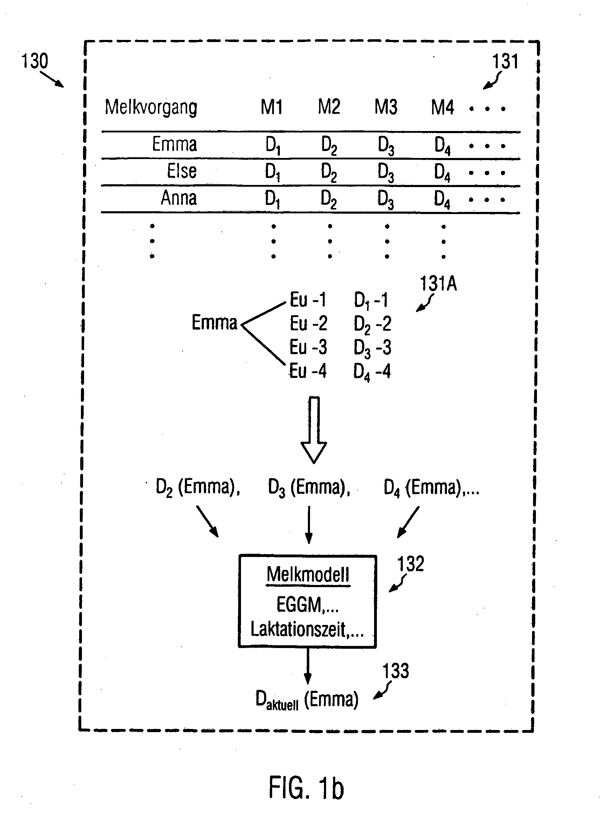

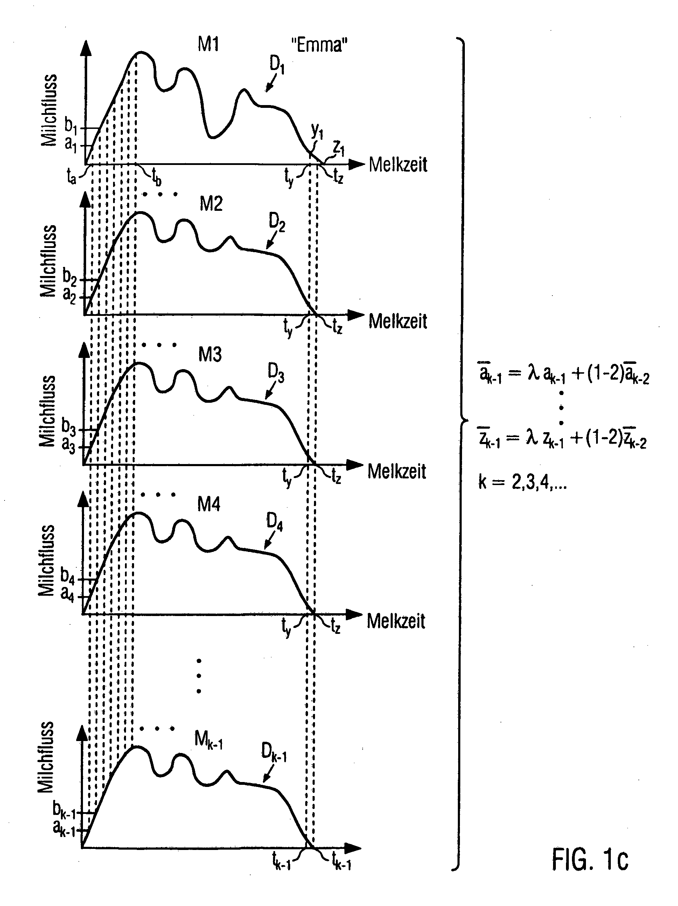

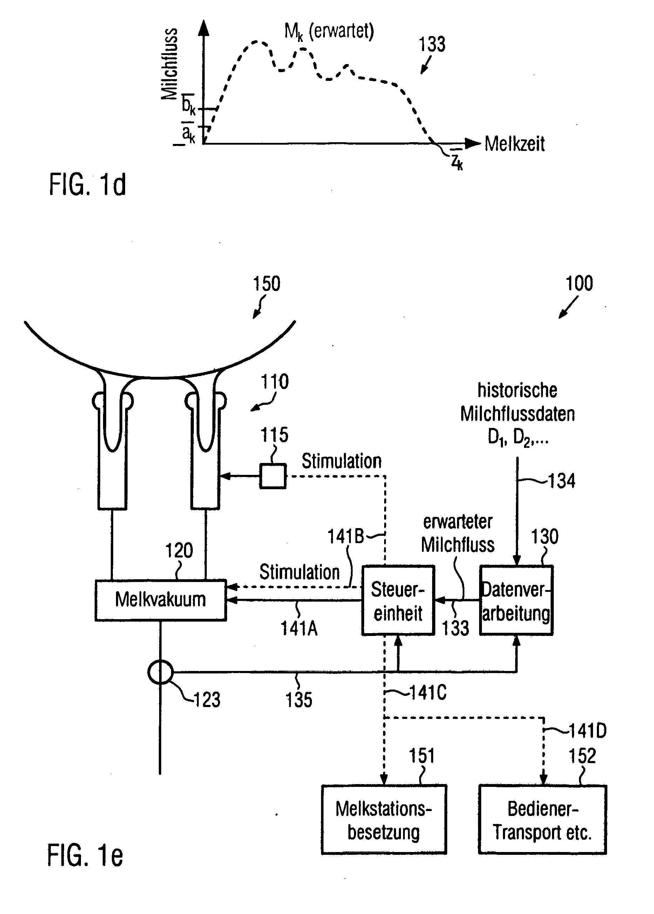

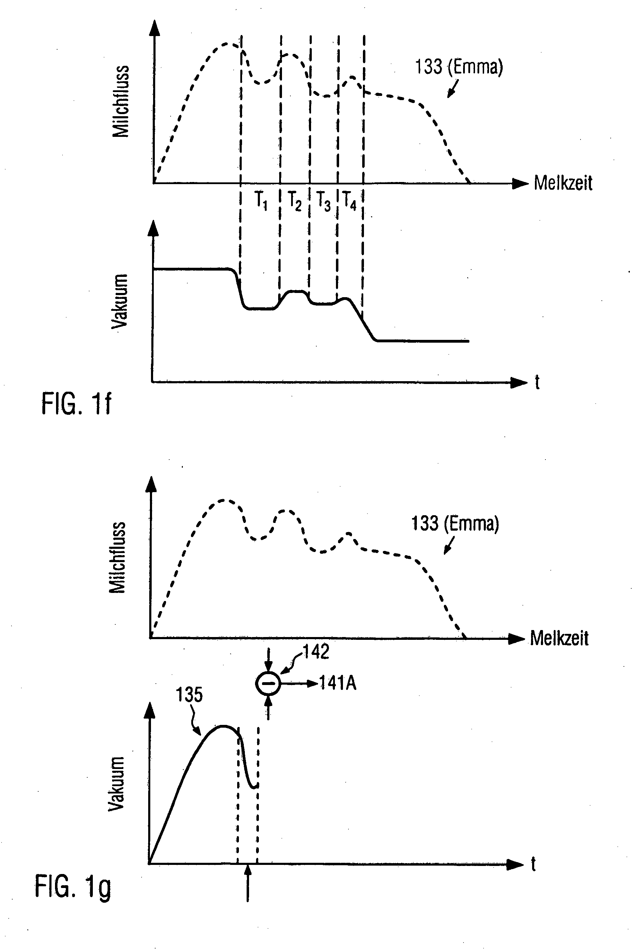

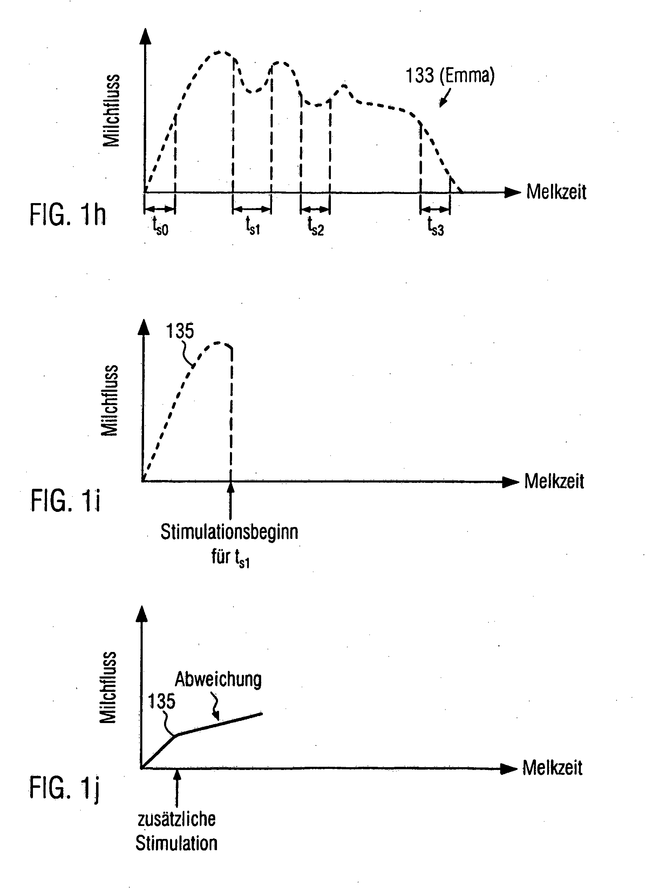

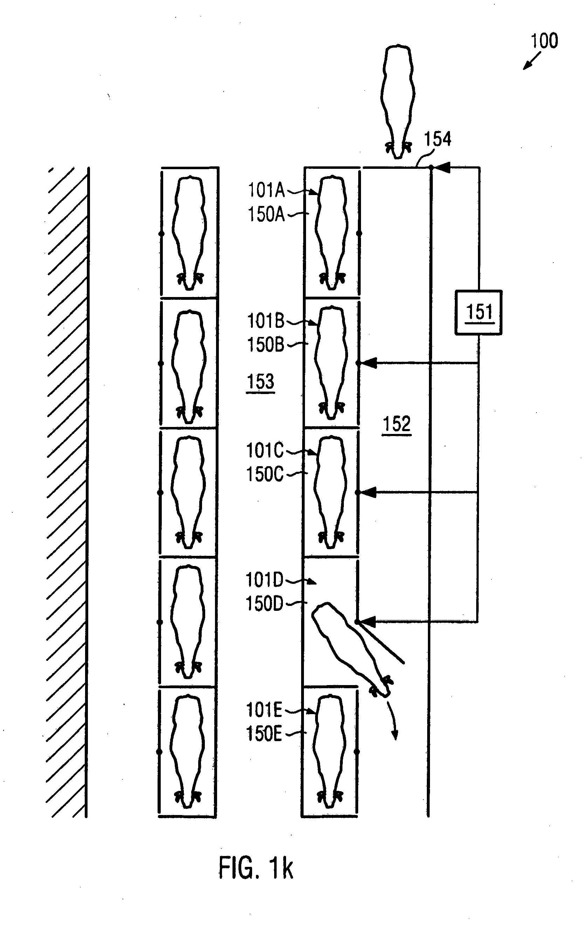

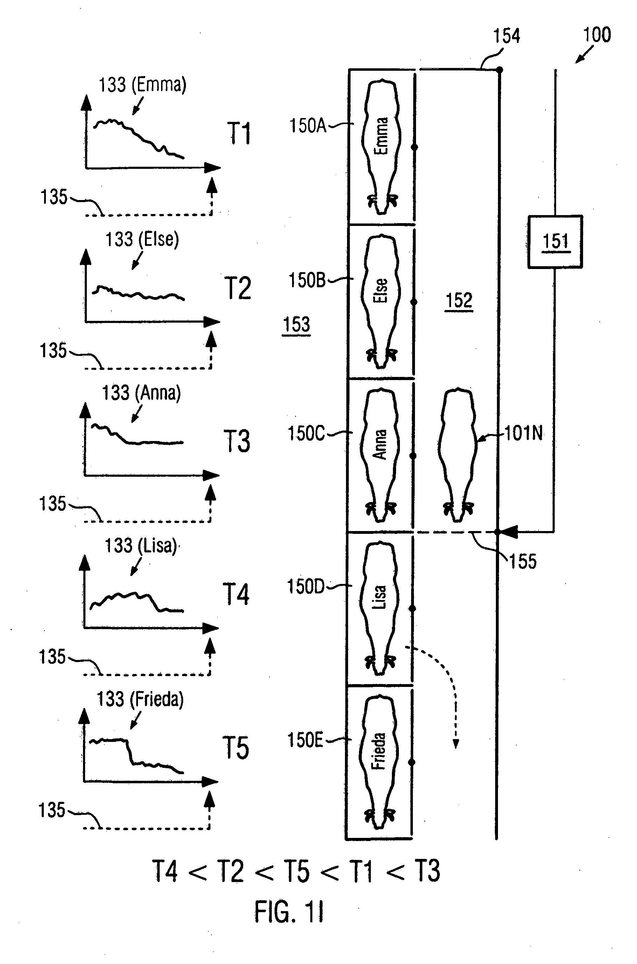

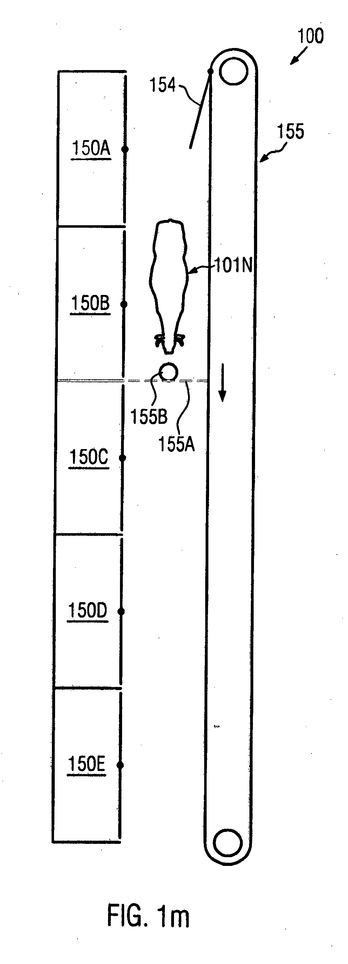

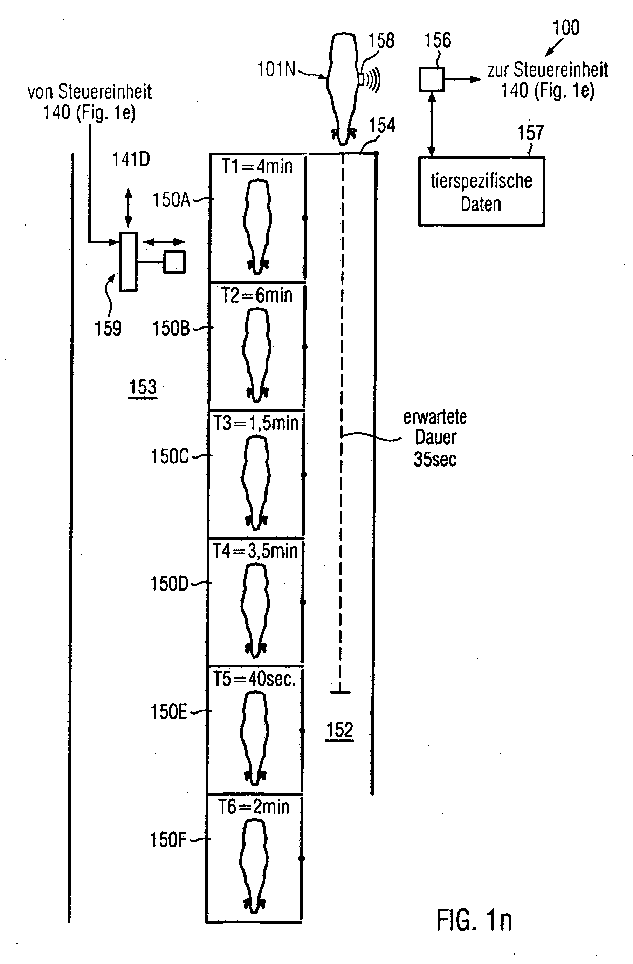

Fig. 1 b schematisch die Datenverarbeitungseinrichtung aus Fig. 1 a, in der die über einen längeren Zeitraum gewonnen Messdaten als geeignete historische Messdaten verwendet werden, um kategorisierte, d. h. tierindividuelle, Datensätze zu erzeugen, die vorausschauend ein Melkverhalten des Tieres kennzeichnen,
Fig. 1 c schematisch einen in der Datenverarbeitungseinheit implementierten Ablauf, mit welchem ein individueller Datensatz aus historischen Messdaten gemäß anschaulicher Ausführungsformen erzeugt wird,
Fig. 1d schematisch einen Datensatz, der das erwartete individuelle Verhalten während eines Melkvorgangs auf der Grundlage historischer Messdaten zeigt,
Fig. 1 e schematisch die Melkstation, in der eine Steuereinheit funktionsmäßig mit der Datenverarbeitung in Verbindung steht, so dass Steuersignale auf der Grundlage des erwarteten Melkverhaltens bereitgestellt werden, um eine gewisse Phase des Melkvorgangs und/oder die Besetzung der Melkstation mit zu melkenden Tieren erfindungsgemäß zu steuern,
Fig. 1f schematisch eine Gegenüberstellung des erwarteten Melkverhaltens etwa in Form einer erwarten Milchflusskurve und eines Melkprozessparameters, etwa dem Melkvakuum gemäß anschaulicher Ausführungsformen,
Fig. 1g schematisch eine Ausführungsform, in der das erwartete Melkverhalten mit dem tatsächlichen Verhalten verglichen wird,
Fig. 1h bis 1j schematisch Strategien, in denen auf der Grundlage des erwarteten Melkverhaltens eine Stimulationssteuerung gemäß anschaulicher Ausführungsformen erfolgt,
Fig. 1k eine Melkstation mit mehreren Melkplätzen, wobei die Problematik bei der Besetzung frei werdender Melkplätze gezeigt ist,
Fig. 1l schematisch die Melkstation, wobei die Besetzung auf der Grundlage einer steuerbar aktivierbaren Barriere in vorausschauender Weise gemäß anschaulicher Ausführungsformen erfolgt,
Fig. 1m die Melkstation mit einer Führungsvorrichtung, wobei die Führungsvorrichtung steuerbar aktivierbar ist, um beispielsweise die Schrittgeschwindigkeit zu bestimmen, die Warteposition festzulegen, und dergleichen, und
Fig. 1n die Melkstation gemäß anschaulicher Ausführungsbeispiele, wobei die Identität des Tieres vor dem Betreten des Zugangs festgestellt wird, um die Steuereinheit mit weiteren tierspezifischen Informationen zu versorgen und/oder wobei eine Transporteinrichtung zum Transportieren eines Bedieners oder einer automatischen Vorrichtung zum Ansetzen eines Melkgeschirrs durch die vorausschauende Steuerungsstrategie vorgesehen ist.

Fig. 1a zeigt schematisch einen Teil einer Melkstation 100 gemäß anschaulicher Ausführungsformen der vorliegenden Erfindung. Die Melkstation 100 umfasst einen oder mehrere Melkplätze, die schematisch als 150 bezeichnet sind, wobei der eine oder die mehreren Melkplätze 150 durch zu melkende Tiere, die schematisch mit 101 bezeichnet sind, zu besetzen sind. Jeder des einen oder der mehreren Melkplätze 150 ist mit einem Melkgeschirr 110 versehen, das eine geeignete Anzahl an Melkbechern 111 aufweist, die wiederum mit einer Vakuumanlage 120 in Fluidverbindung stehen. Beispielsweise sind die Melkbecher 111 mit einem Zitzengummi 112 ausgekleidet, der zur mechanischen Fixierung an dem Tier 101 und zum Ableiten der ermolkenen Milch mittels eines Melkvakuums dient. Beispielsweise wird über eine Fluidleitung 113 in dem Zitzengummi 112 ein entsprechendes Melkvakuum 121a bzw. 121b an die Zitzen angelegt. Dabei können die Melkvakuumwerte 121a, 121b unterschiedlich sein, wobei dies von der Konfiguration der Vakuumanlage 120 abhängt. In diesem Zusammenhang ist ein Melkvakuum als ein gewisser Unterdruck gegenüber dem äußeren atmosphärischen Druck zu betrachten, wobei eine höhere Druckdifferenz zwischen dem äußeren Atmosphärendruck und dem in der Fluidleitung 113 vorherrschenden Druck als ein höheres Melkvakuum bezeichnet wird, wohingegen ein geringerer Druckunterschied als ein kleineres Melkvakuum bezeichnet wird. Typischerweise ist auch eine gesteuerte Einrichtung vorgesehen, um einen "pulsierenden" Milchfluss zu erzeugen, wobei die entsprechende Einrichtung schematisch als 122 dargestellt und so ausgebildet ist, dass der Innenraum des Melkbechers 111 mit einem geeigneten Druck, etwa dem äußeren Atmosphärendruck oder einem entsprechenden Teil davon, beaufschlagt werden kann, so dass dies zu einer Einfaltung des Zitzengummis 112 unterhalb der Zitze führt, wie dies auch zuvor erläutert ist. D. h. durch das Einfalten des Zitzengummis 112 bleibt zwar generell das Vakuum unterhalb der Zitze bestehen, es ergibt sich aber eine Einschnürung des unteren Zitzenbereichs, das einerseits zu einer Unterbrechung des Milchflusses führt andererseits jedoch zu einer geeigneten massierenden Wirkung beiträgt, um generell positiv auf das Gewebe der Zitze einzuwirken. Insbesondere gelingt durch diese Art der Ansteuerung ein Saugverhalten, das zumindest in gewisser Weise dem natürlichen Saugen eines Kalbes nachgebildet ist. Wie bereits zuvor dargelegt ist, üben die jeweiligen Prozessparameter, etwa die Größe des Melkvakuums, die Häufigkeit und die Intensität des Einfaltens des Zitzengummis mittels der Anlage 122, und dergleichen einen großen Einfluss auf das Verhalten des Tieres 101 während des Melkvorgangs aus, wobei jedoch die tierspezifischen Unterschiede in der Regel zu einem grundsätzlich unterschiedlichen Verhalten bei ansonsten gleichen Melkparametern führen.

Typischerweise ist an einer geeigneten Stelle eine Sensoreinrichtung oder Messvorrichtung 123 vorgesehen, die Messdaten ermittelt, die den Milchfluss des Tieres 101 während eines Melkvorgangs repräsentieren und auch die Identität des zu melkenden Tieres feststellt, sofern diese Information nicht durch andere Sensoren ermittelt, wie dies später beschrieben ist. D. h., die Daten, die von der Einrichtung 123 bereitgestellt werden, geben die momentane Flüssigkeitsmenge über die Zeit hinweg an oder stellen eine andere geeignete Größe dar, die den Milchfluss repräsentieren kann. Beispielsweise kann in beliebig klein gewählten Zeitintervallen die in diesem Intervall ermolkene Milchmenge festgestellt werden, so dass dies ebenfalls den Milchfluss über die Zeit hinweg repräsentiert. In anderen Verfahren kann der zeitliche Verlauf des Milchflusses durch die bis zu einem Zeitpunkt integrierte Milchmenge festgelegt werden, wobei geeignet viele Zeitpunkte verwendet werden. Beispielsweise kann der Abfluss über eine Fluidleitung 124 zeitlich gemessen werden, um den gesamten Milchfluss der einzelnen Euterviertel über die Zeit hinweg zu bestimmen. In anderen Ausführungsformen wird der Milchfluss in jedem einzelnen Euterviertel oder in Euterviertelpaaren ermittelt, so dass sich eine detailliertere Unterteilung entsprechender Daten ergibt, die den Milchfluss repräsentieren. Die Sensoreinrichtung 123 ist in Funktionsverbindung mit einer Datenverarbeitungseinheit 130, der die entsprechenden Daten in geeigneter Weise zugeleitet werden, beispielsweise in Echtzeit mittels geeigneter Datenübermittlungskanäle, beispielsweise in Form von Funkverbindung, optischen Verbindungen, Kabelverbindungen, und dergleichen. Die Datenverarbeitungseinheit 130 erhält somit entsprechende Datensätze, die in dem dargestellten Beispiel als D1 bezeichnet sind und einem entsprechenden Melkvorgang, der als M1 bezeichnet ist, zugeordnet sind. Beispielsweise wird für ein Tier 101, das als "Emma" bezeichnet ist, ein entsprechender Datensatz D1 für den Melkvorgang M1 erhalten, der auf Grund der zuvor genannten Eigenschaften in der Regel für das Tier "Emma" einen charakteristischen Verlauf aufweist, sofern nicht entsprechende Unregelmäßigkeiten während des Melkvorgangs M1 aufgetreten sind. In gleicher Weise wird ein Datensatz D1 ermittelt, der beispielsweise für ein Tier "Else" für den zugehörigen Melkvorgang M1 charakteristisch ist. In gleicher Weise wird für das Tier "Anna" der Datensatz D1 gewonnen, der charakteristisch ist für den Melkvorgang M1. Je nach Auslastung des einen oder der mehreren Melkplätze 150 werden entsprechend viele Tiere 101 gemolken, wobei dazu die zugehörigen Datensätze D1 erzeugt werden. In der vorliegenden Systematik wird ein zugehöriger Melkvorgang als M1 bezeichnet, da angenommen wird, dass die Melkvorgänge innerhalb einer relativ engen Zeitperiode stattfanden, beispielsweise am gleichen Tag morgens beim Betrieb der Melkstation 100, so dass in etwa grob gleiche äußere Bedingungen während der Melkvorgänge M1 bestanden. Gleiches gilt für entsprechende Melkvorgänge M2, ..., etc. Die entsprechenden Datensätze D1, D2, ..., für die jeweiligen Melkvorgänge M1, M2, ... werden dann in entsprechender Weise verarbeitet, um daraus einen für jedes Tier individuellen Datensatz zu erzeugen, der dann in "vorausschauender" Weise das Melkverhalten angibt, wie es bei einem nächsten vorzunehmenden Melkvorgang erwartet wird. Dieser Datensatz wird einer Steuereinheit 140 zur Verfügung gestellt, die in Funktionsverbindung mit der Datenverarbeitungseinheit 130 steht, um daraus Steuersignale 141 zu erzeugen, die verwendet werden, um den Melkvorgang oder gewisse Phasen davon steuern und/oder um Betriebsvorgänge, die die Besetzung der Melkplätze 150 betreffen, in geeigneter Weise zu steuern, wie dies nachfolgend detaillierter erläutert ist.

Fig. 1b zeigt schematisch die Datenverarbeitungseinheit 130 gemäß einer Ausführungsform, in der ein Ablauf implementiert ist, um gewünschte tierindividuelle Datensätze 133 aus den gemessenen Daten D1, D2, D3, ... für die jeweiligen Melkvorgänge M1, M2, ... zu erzeugen. Dazu wird gemäß einer Ausführungsform eine Kategorisierung der Messergebnisse vorgenommen, wie dies schematisch durch 131 angezeigt ist, wobei die jeweiligen Datensätze D1, D2, D3, ... den entsprechenden Tieren zugeordnet werden. D. h., für die beispielhaft aufgeführten Tiere "Emma", "Else", "Anna", ... werden die Datensätze D1, D2, D3, D4, ... jeweils korrekt zugeordnet, so dass für jedes Tier nur die von diesen Tier erzeugten Messdaten verwendet werden. In der gezeigten Ausführungsform können die jeweiligen Datensätze auch dahingehend geprüft werden, ob sie "gültige" oder "ungültige" Messdaten repräsentieren. Dazu wird etwa geprüft, ob Unregelmäßigkeiten während eines Melkvorgangs aufgetreten sind, die zu einem außergewöhnlichen Melkverhalten und damit zu einer gestörten Milchflusskurve geführt haben. Beispielsweise sei angenommen, dass im Datensatz D1 für das Tier "Emma" eine Unregelmäßigkeit aufgetreten ist, etwa das Abfallen eines Melkbechers, oder dergleichen, so dass sich ein ungewöhnlicher Verlauf der Milchflusskurve beim Melkvorgang M1 ergeben hat. Eine entsprechende Bewertung kann in automatisierter Weise durchgeführt werden, indem die Messdaten nach gewissen Parameterwerten abgesucht werden, etwa einer längeren Gesamtmelkdauer, etc. Dazu können auch geeignete Schwellwerte festgelegt werden, um einen Messdatensatz als einen gültigen oder ungültigen Datensatz zu bewerten. Somit kann von dem bei der Kategorisierung 131 ausgesuchten Messdaten angenommen werden, dass sie einen relativ typischen Verlauf des Melkvorgangs für die jeweiligen Melkzeitpunkte M1, M2, M3, M4, ... repräsentieren. Somit beinhalten die Messdaten der jeweiligen Kategorien "Emma", "Else", "Anna", ... geeignete "historische" Messdaten, aus denen das Verhalten der jeweiligen Tiere zum aktuellen Zeitpunkt, d.h. bei Durchführen eines nächsten Melkvorganges, mit großer Genauigkeit vorhergesagt werden kann.

In einer Ausführungsform findet die Kategorisierung 121 in einer weiter verfeinerten Weise statt, wie dies durch 131 a angegeben ist, wobei jede Kategorie in zwei oder mehr Unterkategorien eingeteilt werden kann, beispielsweise können entsprechende Daten für jedes Euterviertel oder für Gruppen aus Eutervierteln ermittelt werden, sofern eine korrekte Zuordnung der Messdaten zu den jeweiligen "Unterkategorien" gewährleistet ist. In dem dargestellten Beispiel wird etwa die Kategorie "Emma" in die Unterkategorien EU-1, ... EU-4 mit zugehörigen Daten D1-1, D1-4 aufgeteilt, so dass sich aus diesen Daten das Verhalten jedes einzelnen Euterviertels bei geeigneter Aufbereitung der Datensätze ermitteln lässt. Eine entsprechende verfeinerte Kategorisierung der Messdaten ist insbesondere in Melkstationen möglich, in denen ein vollautomatisierter Melkvorgang stattfindet, da dort mit hoher Wahrscheinlichkeit gewährleistet ist, dass die Zuordnung zwischen Eutervierteln und Milchflussdaten stets in korrekter Weise stattfindet.

Im Block 132 wird aus den kategorisierten Daten, beispielsweise aus den Daten D2 (Emma), D3 (Emma), ... ein "Modell" des Melkvorgangs für die Kategorie oder das Tier "Emma" erstellt. Dies ist so zu verstehen, dass aus den historischen Daten einer Kategorie durch geeignete Datenaufbereitung ein Datensatz 133 ermittelt wird, der den Milchfluss repräsentiert, der erwartet wird, der dem aktuellen Zustand des Tieres entspricht und damit erwartet wird, wenn ein nachfolgender Melkvorgang ausgeführt wird. Dazu kann im Block 132 eine geeignete Datenverarbeitung stattfinden, etwa durch Anwenden von Mittelwertbildungen, so dass ein "durchschnittliches" Melkverhalten ermittelt wird, wobei auch andere Informationen einfließen können, etwa der Zeitpunkt innerhalb der Laktationsperiode, um damit dem allgemeinen Trend Rechnung zu tragen, dass zu Beginn der Laktationsphase in der Regel etwas höhere Milchleistungen im Vergleich zum Laktationszeiteinde auftreten. Generell können auch bei der Modellbildung weitere Faktoren Berücksichtigung finden, etwa eine zu erwartende Futterumstellung, generell die Jahreszeit, und dergleichen, wobei entsprechende Einflüsse auch bei Bedarf aus allen Messdaten, also nicht tierspezifisch, ermittelt werden können, um eine hohe statistische Signifikanz zu erzielen, wenn beispielsweise entsprechende Änderungen innerhalb einer einzelnen Kategorie, also in den Messdaten, die einem einzelnen Tier zugeordnet sind, weniger stark ausgeprägt sind.

In einem Ausführungsbeispiel wird ein exponentiell gewichteter gleitender Mittelwert angewendet, um eine geeignete Gewichtung der kategorisierten Messdaten zu erzeugen. Auf diese Weise kann beispielsweise das Verhalten des Tieres in der jüngeren Vergangenheit stärker gewichtet werden, als die weiter zurückliegenden Messdaten, so dass damit die aktuelle Verfassung des Tieres stärker bei der Erzeugung der vorausschauenden Datensätze 133 berücksichtigt wird. Wenn etwa gesundheitliche Probleme in vergangenen Phasen einen Einfluss ausübten, und die Krankheit weiterhin besteht, kann durch eine stärkere Gewichtung der Messdaten dies bei der Bestimmung des erwarteten Melkverhaltens entsprechend berücksichtigt werden.

Fig. 1c zeigt schematisch einen Ablauf zur Erzeugung des vorausschauenden Datensatzes 133 am Beispiel des Tieres "Emma". Wie gezeigt, sind für die einzelnen Melkvorgänge M1, ..., M(k-1) die Messdaten D1,..., D(k-1) ermittelt und in der zuvor beschriebenen Weise kategorisiert worden. D. h., es ist sichergestellt, dass die Daten D1, ..., D(k-1) den jeweiligen Melkvorgängen M1, ... M(k-1) des Tieres Emma zugeordnet sind. In dem gezeigten Beispiel sei angenommen, dass die Daten D1 für den Melkvorgang M1 ein ungewöhnliches Melkverhalten repräsentieren, das, je nach Festlegung entsprechender Entscheidungskriterien, als ein ungültiges Verhalten eingestuft werden kann, so dass dieser Datensatz bei der Ermittlung des geeigneten individuellen Datensatzes ausgeschlossen wird, oder der Grad der Unregelmäßigkeit liegt innerhalb eines zulässigen Bereichs, so dass auch der Datensatz D1 Berücksichtigung findet, wobei jedoch auf Grund des gleitenden und gewichteten Mittelwerts dessen Einfluss mit fortschreitender Anzahl der berücksichtigten Messdaten zunehmend unbedeutender wird.

Zur Ermittlung eines charakteristischen Milchflusses werden in dem dargestellten Beispiel etwa a geeignet viele Positionen der horizontalen Achse, die die Melkzeit während jedes Melkvorgangs repräsentiert, als Stützstellen genommen und es werden die zugehörigen Milchflusswerte ermittelt, die als a, b, ..., y, z bezeichnet sind. D. h., für den Datensatz D1 ergeben sich die entsprechenden Milchflusswerte a1, b1, ..., y1, z1 zu den jeweiligen festgelegten Stützpunkten bzw. Zeiten ta, tb, ..., ty, tz. In ähnlicher Weise ergeben sich für den Datensatz D2 die Werte a2, b2, ..., y2, z2 und dergleichen, bis sich für den letzten verfügbaren Datensatz D(k-1) entsprechend die Werte a(k-1), b(k-1), ..., y(k-1), z(k-1) ergeben. Generell kann somit aus zwei Datensätzen, beispielsweise den Datensätzen D2 und D3, falls der Datensatz D1 als ungültig erachtet wird, ein gleitender Mittelwert berechnet werden, um eine "mittlere" Milchflusskurve zu erhalten, von der man annimmt, dass sie das Tierverhalten in guter Genauigkeit nach dem Melkvorgang M2 angibt. Beispielswiese können die jeweiligen Werte a2, a3 ermittelt werden, wobei auch eine geeignete Gewichtung der jeweiligen Werte erfolgt, um damit einen gemittelten Wert a zu erhalten. In ähnlicher Weise können die weiteren Werte der Milchflusskurve gewichtet gemittelt werden, so dass sich schließlich für jeden Zeitpunkt ta, ..., ty ein entsprechen gewichteter Mittelwert ergibt, wobei die Gesamtheit dieser Mittelwert sodann ein eine gewichtete Milchflusskurvendarstellung repräsentiert. Auf der rechten Seite der Figur 1c ist eine schematische Darstellung der gleitenden Mittelwertberechnung mit geeigneter Gewichtung dargestellt, woraus sich durch sukzessive Anwendung ein gemittelter Wert a(k-1) für die Gesamtheit der Datensätze D2 bis D(k-1) ergibt, indem der letzte entsprechende a-Wert, d. h. a(k-1), mit dem Gewichtungsfaktor λ gewichtet addiert wird zudem bislang aus den Daten D2, ... D(k-2) ermittelten Mittelwert a(k-2), wobei dieser Mittelwert mit (1-λ) gewichtet wird. In entsprechender Weise kann für alle Stützpunkt ta, ... ty der zugehörige aktuelle gemittelte Wert ermittelt werden, wie dies für den letzten Wert a(k-1) in der Figur dargestellt ist. Durch geeignete Auswahl des Gewichtungskoeffizienten λ, beispielsweise im Bereich von 0,2 ... 03, kann somit sichergestellt werden, dass die Datensätze der jüngsten Melkvorgänge stärker berücksichtigt werden, wobei jedoch die Historie der früheren Verläufe der Melkvorgänge ebenfalls geeignet berücksichtigt ist.

Fig. 1d zeigt schematisch einen entsprechenden Datensatz 133, der das individuelle Melkverhalten eines Tieres, beispielsweise des Tieres "Emma" (siehe Fig. 1c) repräsentiert, etwa in Form der Milchflusskurve mit einer geeigneten Anzahl an Stützstellen, um damit das charakteristische Verhalten der Milchflusskurve wiederzugeben. Der Datensatz 133 kann somit als ein vorausgesagtes oder erwartetes Verhalten der Milchflusskurve für den Melkvorgang M(k), der noch auszuführen ist, verwendet werden, und beinhaltet somit die gesamte oder einen gewünschten Teil der Historie der Melkvorgänge für das entsprechende Tier, wobei auf Grund der geeigneten Auswahl der Gewichtungskoeffizienten bei Bedarf das Verhalten in der jüngeren Vergangenheit entsprechend stärker berücksichtigt werden kann.

In weiteren Ausführungsformen kann der Verlauf der Milchflusskurve, d. h. der Datensatz 133, auch noch weitere Einflüsse berücksichtigen, wie dies zuvor auch erläutert ist. Beispielsweise können gewissere bekannte äußere Veränderungen, die beispielsweise in der jüngeren Vergangenheit stattfanden oder die ab dem Melkzeitpunkt M(k) vorliegen, Berücksichtigung finden, da diese entsprechenden Ereignisse ggf. noch nicht ausreichend in den zuvor erhaltenen Messdaten enthalten sind. Dadurch kann die Genauigkeit der vorausschauenden Datensätze 133 weiter verbessert werden. Z.B. kann die generell Abnahme des Milchflusses zum Ende der Laktationsphase hin durch eine geeignete Korrektur in dem Datensatz aufgrund eines einfachen Modells, etwa einem linearen Zusammenhang der Abnahme und der Zeit bis zum Ende der Laktationsphase eingebunden werden. Es können auch komplexere Modelle Anwendung finden, die etwa Werte oder Verläufe mehrerer Laktationsphasen berücksichtigen.

Fig. 1e zeigt schematisch die Melkstation 100 in einer Betriebsphase gemäß anschaulicher Ausführungsformen. Wie gezeigt, werden der Steuereinheit 140 von der Datenverarbeitungseinheit 130 die Daten 133 zugeleitet, die, wie zuvor erläutert ist, für jedes Tier individuell das Melkverhalten beschreiben, das aus historischen Milchflussdaten 134, beispielsweise den Daten D1, D2, ..., wie sie zuvor mit den Figuren 1a bis 1c gewonnen werden. Die Steuereinheit 140 ermittelt auf der Grundlage der tierindividuellen Datensätze 133 entsprechende Steuersignale 141a und/oder 141b und/oder 141c, um damit Abläufe in der Melkstation 100 auf der Grundlage des erwarteten Melkverhaltens eines jeweiligen Tieres zu steuern. In einer anschaulichen Ausführungsform erzeugt die Steuereinheit 140 die Steuersignale 141a, die der Einheit 120 zugeleitet werden, um damit das Melkvakuum in Abhängig der individuellen Datensätze 133 zu steuern, so dass eine tierindividuelle Beaufschlagung mit Melkvakuum durch die Einheit 120 erfolgt. In einer weiteren anschaulichen Ausführungsform wird zusätzlich oder alternativ zu den Steuersignalen 141a ein entsprechendes Steuersignal 141 b erzeugt, das einer Stimulationseinheit 115 zugeleitet wird, so dass in tierspezifischer Weise die Stimulation gestaltet wird. D. h., die Stimulation kann für jedes Tier spezifisch in einer gewünschten zeitlichen Abfolge, Intensität, und dergleichen erfolgen, wie dies die Steuereinheit 140 aus den individuellen Datensätzen 133 ermittelt, wie nachfolgend detaillierter beschrieben ist.

In weiteren anschaulichen Ausführungsformen wird alternativ oder zusätzlich zu dem Steuersignal 141a und/oder dem Steuersignal 141b ein weiteres Steuersignal 141c erzeugt, das einer Einrichtung 151 zugeleitet wird, die geeignet ausgebildet ist, die Besetzung der einen oder mehreren Melkplätze 150 in automatisierter Weise zu koordinieren, wie dies auch nachfolgend detaillierter erläutert ist. In weiteren Ausführungsformen kann zusätzlich zu einem oder mehreren der Steuersignale 141a, 141b, 141c ein Steuersignal 141d bereitgestellt werden, das für die Steuerung einer Transporteinrichtung 152 dient, die in der Station 100 vorgesehen sein kann, um einen Bediener in einem semiautomatisierten Melksystem in geeigneter Weise vor Melkplätzen 150 zu positionieren, oder um eine Vorrichtung zum automatischen Ansetzen von Melkgeschirren geeignet zu positionieren, wie dies auch nachfolgend detaillierter erläutert ist.

In der dargestellten Ausführungsform ist ferner die Sensoreinheit oder das Messsystem 123 vorgesehen, um aktuelle Messdaten 135 zu erzeugen, die der Datenverarbeitungseinheit 130 zugeführt werden, um beispielsweise als ein Teil der historischen Milchflussdaten 134 verarbeitet zu werden, wie dies auch zuvor erläutert ist, während in anderen Ausführungsformen, die aktuellen Milchflussdaten 135 auch der Steuereinheit 140 zugeleitet sind, die diese Daten zur Erzeugung eines oder mehrerer der Steuersignale 141a, 141b, 141c verwendet, wie dies auch nachfolgend detaillierter erläutert ist.

Da im Betrieb der Melkstation 100 somit der Steuereinheit 140 das erwartete Verhalten eines zu melkendes Tieres auf Grund des Datensatzes 133 im Voraus bekannt ist, können in geeigneter Weise die Steuersignale 141a und/oder 141b und/oder 141c bereitgestellt werden, um die Gesamteffizienz der Melkstation 100 zu erhöhen. Dabei kann das Erzeugen der Steuersignale gänzlich auf der Grundlage des Datensatzes 133, also auf der Grundlage des erwarteten Milchflusses, beruhen, da beispielsweise der zeitliche Verlauf in guter Weise vorbekannt ist, so dass tierspezifisch etwa Werte des Melkvakuums, Zeitpunkte und Intensität und Art der Stimulation, und/oder die Besetzung der Melkplätze 150 auf Grund des bekannten zeitlichen Verlaufs gesteuert werden können. In anderen Ausführungsformen können zusätzlich die aktuellen Messdaten 135 von der Steuereinheit 140 verwendet werden, um die Steuersignale mit höherer Zuverlässigkeit bereitzustellen. Beispielsweise können Unregelmäßigkeiten des Melkvorganges wesentlich zuverlässiger erkannt werden auf der Grundlage eines Vergleichs zwischen den aktuellen Daten 135 und dem Datensatz 133, so dass entsprechende Steuerungsaktivitäten mit erhöhter Zuverlässigkeit erfolgen können. Beispielsweise kann bei einem Abfallen eines Melkbechers im Melkgeschirr 110 eine entsprechende Neuberechnung des erwarteten Endes des Melkvorgangs stattfinden, wobei auch ggf. eine geeignete Steuerung der Melkbecher stattfindet, so dass die nicht betroffenen Melkbecher mit einem deutlich geringeren Vakuum beaufschlagt werden oder aber der Melkvorgang in diesen Melkbechern rechtzeitig entsprechend den vorausgesagten Melkzeitende beendet wird, wohingegen der betroffene Melkbecher weiter mit einem geeigneten Vakuum beaufschlagt wird.

Fig. 1f zeigt schematisch einen Steuerungsvorgang, wie er auf der Grundlage der Steuersignale 141a (siehe Fig. 1e) stattfinden kann, um das Melkvakuum gemäß den vorausschauenden Daten 133 anzupassen. In dem Beispiel soll das erwartete Verhalten des Milchflusses, das durch den Datensatz 133 repräsentiert ist, etwa das Tier "Emma" darstellen. Auf der Grundlage der Daten 133 können beispielsweise von der Steuereinheit geeignete Zeiten und zugehörige Werte für das Betriebsvakuum ermittelt werden. In den dargestellten Beispiel sind etwa die Intervalle T1, T2, T3 und T4 dargestellt, in denen entsprechend angepasste Vakuumwerte verwendet werden. Beispielsweise ist in dem Intervall T1 aus dem vorausschauenden Daten 133 bekannt, dass insgesamt die Milchmenge zurückgeht, so dass auch in dieser Phase das entsprechende Melkvakuum verringert werden kann, da die abzuführende Menge an Milch geringer ist. Damit kann die physische Belastung des Tieres reduziert werden, so dass insgesamt ein höherer Grad an Wohlbefinden und eine Steigerung des Gesundheitszustands erreicht wird. In ähnlicher Weise ergibt sich im Intervall T2 ein Anstieg des erwarteten Milchflusses, so dass in dieser Phase auch ggf. das Melkvakuum erhöht werden kann, wobei ggf. ein insgesamt geringerer Maximalwert verwendet wird. In ähnlicher Weise können auch in den Intervallen T3 und T4 geeignete Vakuumwerte verwendet werden. Die Höhe der entsprechenden Vakuumwerte kann dabei generell der Größe der Milchflusswerte angepasst werden, wobei dies von der Steuereinheit entsprechend der detektierten Melkzeit erfolgen kann. Ein entsprechender Steuerungsablauf kann bereits im Voraus festgelegt werden und wird dann von der Steuereinheit beim Erkennen der Identität des zu melkenden Tieres abgerufen und in die Steuersignale umgesetzt, während in anderen Ausführungsformen die Parameterwerte in "Echtzeit" ermittelt werden, etwa auf Basis eines implementierten Algorithmus, der eine Zuordnung zwischen Milchfluss und Vakuum und Gesamtmelkzeit, etc. angibt und damit aufgrund der tier-individuellen Daten 133 eine tierspezifische Anpassung ergibt.

Es sollte jedoch beachtet werden, dass auch andere Steuerungsstrategien implementiert werden können, die zum Erreichen eines effizienten Melkvorganges als geeignet erachtet werden. Beispielsweise kann das Melkvakuum in Form gröberer Zeitblöcke gesteuert werden, so dass generell Phasen mit einem geringeren integrierten Milchfluss auf der Grundlage eines geringeren Melkvakuums durchlaufen werden, ohne dass entsprechende lokale Maxima und Minima berücksichtigt werden.

Fig. 1g zeigt schematisch eine Ausführungsform, in der eine Vergleichseinheit 142 in der Steuereinheit vorgesehen ist, wobei aktuelle Daten, etwa die Daten 135 (siehe Fig. 1e) der Steuereinheit, d. h. in diesem Falle der Vergleichseinheit 142 zugeleitet sind. Des weiteren erhält die Einheit 142 die Daten 133, die den erwarteten Milchfluss repräsentieren, wie dies auch zuvor erläutert ist. Aus dem Vergleich der aktuellen Milchflussdaten 135 mit den erwarteten Daten 133 kann somit in relativ eindeutiger Weise die aktuelle Situation des Melkvorganges ermittelt und geprüft werden. Beispielsweise wird in dem mit gestrichelten Linien dargestellten Zeitintervall erkannt, dass eine deutliche Abweichung von der Kurve 133 stattfindet. Dies kann beispielsweise durch Abfallen eines Melkbechers, und dergleichen verursacht werden. Die Vergleichseinheit 142 ist bei einer Ausführungsform so ausgebildet, dass sie Einfluss auf die Steuersignale 141 nehmen kann, um etwa das Melkvakuum zu steuern, beispielsweise durch Verringern des Vakuums, so dass generell an noch anliegenden Melkbechern die Saugleistung verringert wird, so dass der Melkvorgang auch an den noch prozessierten Zitzen in die Länge gezogen wird, da auf Grund des abgefallenen Melkbechers generell die Melkzeit deutlich verlängert wird. In anderen Algorithmen kann das Melkvakuum erhöht werden, um damit einer größeren Gefahr des Abfallens von Melkbechern zu begegnen. In weiteren Ausführungsformen kann die Vergleichseinheit 142 ausgebildet sein, entsprechende Steuerinformation bereitzustellen, beispielsweise kann auf der Grundlage der Daten 133 ein neuer erwarteter Zeitpunkt für das Ende des Melkvorgangs ermittelt werden, etwa nachdem eine entsprechende Störung behoben ist, und dergleichen. Zudem kann bei einem Auftreten einer stärkeren Abweichung, etwa dem Abfallen eines oder mehrere Melkbecher, eine entsprechende Warnung ausgegeben werden, so dass der Bediener oder die automatische Vorrichtung geeignet eingreifen kann, etwa durch wieder Ansetzen des Melkbechers.

Fig. 1h zeigt schematisch eine Ausführungsform, in der die vorausschauenden Daten 133 verwendet werden, um die Stimulation des Melkvorgangs durch die Steuersignale 141 b und die Stimulationseinheit 115 (siehe Fig. 1 e) geeignet zu steuern. Dazu können beispielsweise auf der Grundlage der Daten 133 geeignete Intervalle festgelegt werden, etwa Stimulationsintervalle TS0, TS1, ..., TS3 in denen eine gewisse Art der Stimulation zu einer Anhebung des momentanen Milchflusses führen kann. Diese Stimulationsintervalle werden somit auf Grundlage der Daten 133 in tierspezifischer Weise ermittelt und in der Steuereinheit in entsprechende Stimulationssignale 141b umgesetzt, wobei den jeweiligen Stimulationsintervallen auch weitere Informationen überlagert sein können, die etwa die Intensität oder die Art der Stimulation betreffen. Entsprechende Stimulationen können beispielsweise effizient ausgeführt werden, durch Beeinflussung des Saugtakt/Entlastungstakt-Verhältnisses, und/oder durch geeignet hervorgerufene Schwingungen des Melkgeschirrs, und dergleichen.

Fig. 1i zeigt eine Situation, in der auch die aktuellen Milchflussdaten 135 verwendet werden, um etwa die Stimulation in geeigneter Weise zu steuern. Dazu können die Daten 135 und die Daten 133 der Vergleichseinheit 142 (siehe Fig. 1g) zugeleitet werden, um damit mit einem hohen Grad an Zuverlässigkeit etwa den Beginn jeweiliger zugehöriger Stimulationsphasen zu bestimmen. Beispielsweise wird in der in Fig. 1i gezeigten Situation zunächst verifiziert, dass die Daten 135 bislang einen hohen Grad an Ähnlichkeit mit der Kurve 133 besitzen, so dass nunmehr der Beginn der entsprechenden Stimulationsphase erkannt und eingeleitet werden kann.

Fig. 1j zeigt schematisch die Situation, in der die Daten 135 im Vergleich mit den Daten 133 eine deutliche Abweichung vom erwarteten Verlauf 133 angeben, wobei etwa auf der Grundlage geeignet ausgewählter Schwellwerte nunmehr erkannt wird, dass keine "Extremsituation", beispielsweise das Abfallen eines Melkbechers vorliegt, so dass ggf. ein zusätzliches Stimulieren zu einer besseren Annäherung des aktuellen Melkverhaltens an das erwartete Melkverhalten führen kann. Beispielsweise kann durch eine Einwirkung eines äußeres Reizes eine deutliche Abweichung vom erwarteten Melkverhalten hervorgerufen werden, was durch eine zusätzliche Stimulation zumindest zu einem gewissen Grade kompensiert werden kann. Dazu kann ein geeigneter Steuerungsalgorithmus implementiert sein, der generell bei nicht als kritisch bewerteten Abweichungen eine von der Größe der Abweichung abhängige Stimulation veranlasst.

Somit kann auf Grund der vorausschauenden Messdaten, möglicherweise in Kombination mit den aktuellen Milchflussdaten, eine sehr effiziente Steuerung zumindest gewisser Phasen des Melkvorganges bewerkstelligt werden, so dass sich insgesamt eine Verbesserung des Melkverhaltens ergibt. Es sollte erwähnt werden, dass diese kontinuierliche Effizienzsteigerung bei der Steuerung des Melkvorganges selbst auch langfristig eine insgesamt positive Veränderung des Melkverhaltens, beispielsweise eine Verkürzung der gesamten Melkdauer bei gleichbleibender Milchleistung oder eine höhere Milchleistung bei längerer Melkdauer mit sich bringen kann, wobei diese langfristigen Änderungen ebenfalls in die zu erzeugenden tierindividuellen vorausschauenden Daten einfließen, beispielsweise auf der Grundlage des zuvor erläuterten gewichteten gleitenden Mittelwerts, und dergleichen, so dass eine allmähliche Änderung des Melkverhaltens, die durch die effizientere Steuerung bewirkt wird, sich ebenfalls letztlich in den vorausschauenden Daten wiederfindet. Auf diese Weise wird ein "selbst optimierendes" Verhalten im Hinblick auf die Steuerung des Melkvorgangs erreicht.

Mit Bezug zu den Fig. 1k bis 1n werden nunmehr weitere anschauliche Ausführungsbeispiele beschrieben, in denen zusätzlich oder alternativ zu der vorausschauenden Steuerung einer Phase des Melkvorganges auch die Besetzung von Melkplätzen in der Melkstation durch die vorausschauenden Datensätze gesteuert ist.

Fig. 1 k zeigt schematisch eine Draufsicht der Melkstation 100, in der mehrere Melkplätze 150a, ..., 150e in einer geeigneten geometrischen Anordnung vorgesehen sind, wobei in der gezeigten Ausführungsform einen doppelreihige Anordnung von Melkplätzen vorgesehen ist, die durch einen Bedienergang oder Wartungsgang 153 getrennt sind. Es sollte jedoch beachtet werden, dass die erfindungsgemäßen Prinzipien auch auf andere geometrische Anordnung der Melkplätze 150a, ..., 150e anwendbar ist. Die Melkstation 100 umfasst ferner einen Zugang 152, der als ein Bereich der Station 100 zu verstehen ist, der unmittelbar angrenzend zu einer Vielzahl der Melkplätze 150a, ... 150e vorgesehen ist, so dass Tiere über den Zugang 152 Zutritt zu jedem der angrenzenden Melkplätze erhalten. Typischerweise ist der Zugang durch ein zentrales Tor 154 steuerbar verschließbar, um damit zu gewährleisten, dass eine ungehinderte Zuwanderung und Abwanderung von Tieren zu und von den Melkplätzen 150a, ..., 150e möglich ist. Beispielsweise wird in der dargestellten Situation der Zugang 154 mittels einer Steuerungseinrichtung geschlossen gehalten, um damit das Abwandern eines Tieres 101d aus dem Melkplatz 150d nach erfolgtem Melkvorgang zu ermöglichen. In der dargestellten Situation sind bereits alle Melkplätze 150a, ..., 150e mit einem Tier besetzt, so dass eine Vielzahl an Melkvorgängen gleichzeitig erfolgen kann, wie dies auch zuvor erläutert ist. Dazu wird etwa das entsprechende Melkgeschirr manuell angesetzt, beispielsweise durch einen Bediener oder mehrere Bediener, die in dem Gang 153 Zugang zu den jeweiligen Melkplätzen erhalten. In anderen Ausführungsformen können die mehreren Melkplätze 150a, ..., 150e vollständig automatisiert sein, so dass auch das Ansetzen und Abnehmen von Melkgeschirren in automatisierter Weise erfolgt.

Fig. 1l zeigt schematisch die Melkstation 100 gemäß anschaulicher Ausführungsformen, in denen die Einheit 151 geeignet ausgebildet ist, die Steuersignale 141c (siehe Fig. 1e) zu empfangen, die ein gesteuertes Besetzen der mehreren Melkplätze 150a, ..., 150e auf der Grundlage der vorausschauenden Datensätze ermöglichen. Wie gezeigt, ist der Melkplatz 150a von dem Tier "Emma" besetzt, woraus auf der Grundlage der entsprechenden zugeordneten individuellen Daten 133, möglicherweise in Verbindung mit aktuellen Milchflussdaten 135, ein Zeitpunkt T1 des erwarteten Endes des Melkvorgangs für das Tier Emma von der Steuereinheit ermittelt und in den entsprechenden Steuerungssignalen 141c enthalten ist. In ähnlicher Weise wird ein erwarteter Endpunkt T2 für ein Tier "Else" in dem Melkplatz 150b ermittelt. In gleicher Weise werden für die Tiere "Anna", "Lisa", "Frieda" in den Melkplätzen 150c, 150d, 150e die jeweiligen Endzeitpunkte T3, T4, T5 ermittelt, wobei dies auf der Grundlage der jeweiligen zugeordneten Datensätze 133 und möglicherweise der zugehörigen aktuellen Milchflussdaten 135 erfolgt. D.h., aus den Daten können die erwartete Dauer eines Melkvorgangs berechnet werden, und bei Auftreten einer Abweichung kann eine an die Größe der Abweichung angepasste Neuberechung und damit verlässliche Prognose des Endes erfolgen, da die Gesamtmenge der Milch für den gerade ablaufenden Melkvorgang aus den Daten 133 und der allgemeine Verlauf des Melkvorgangs bekannt sind. Beispielsweise wird in dem vorliegenden Falle eine Reihenfolge T4 < T2 < T5 < T1 < T3 ermittelt, so dass der Melkplatz 150d mit dem Tier "Lisa" als ein nächster Melkplatz ermittelt wird, der erneut zu besetzen ist. Dazu wird über die Einheit 151 auf der Grundlage der Steuersignale 141c der Zugang 152, sobald zumindest der Bereich des Zugangs 152 bis zum Melkplatz 150c frei ist, mit einem neu zu melkenden Tier 101 n beschickt. Beispielsweise wird das entsprechende Tor 154 geöffnet, um dem Tier 101 n den Zutritt zu ermöglichen, wobei dies erfolgt, bevor der Melkvorgang in dem Melkplatz 150d tatsächlich beendet ist.

In der gezeigten Ausführungsform wird dazu eine geeignete Führungsvorrichtung 155 vorgesehen, so dass gewährleistet ist, dass zum Zeitpunkt des Endes des Melkvorganges in dem Melkplatz 150d das neu zu melkende Tier 101 n in unmittelbarer Nähe in einer Warteposition ist oder sich auf den Weg zu dem Melkplatz 150d befindet, wobei dennoch ein ungehindertes Abwandern des Tieres "Lisa" nach Ende des Melkvorgangs über den Zugang 152 ermöglicht wird. Dem gemäß wird nach dem Verlassen des Melkplatzes 150d durch "Lisa" ein unmittelbares Nachrücken des Tieres 101 n ermöglicht, ohne dass ein entsprechendes Zuwandern des Tieres 101 n über die gesamte Strecke im Zugang 152 nach Freiwerden des Melkplatzes notwendig ist, wie dies in konventionellen Systemen zum Besetzen von Melkstationen der Fall ist. Nach dem Abwandern des Tieres "Lisa" und dem Eintreten des Tieres 101 n in den Melkplatz 150d kann eine weitere Positionierung eines weiteren Tieres in dem Zugang 152 erfolgen, wobei etwa das Tier so in den Zugang 151 eingebracht wird, das als nächstes der Melkplatz 150b besetzt werden kann, von dem erwartet wird, dass er in der Reihenfolge als nächster Melkplatz neu zu besetzen ist. Wie zuvor bereits erläutert ist, können auf der Grundlage der aktuellen Milchflussdaten 135 ggf. aktualisierte Berechnungen der jeweiligen Zeitpunkte T1, ..., T5 vorgenommen werden, um damit einer möglichen Sondersituation Rechnung zu tragen, beispielsweise dem Abfallen eines Melkbechers, und dergleichen, so dass auf der Grundlage der vorausschauenden Messdaten ein neuer aktualisierter Zeitpunkt für das Ende des Melkvorgangs ermittelt werden kann. Die Führungsvorrichtung 155 ist dabei in einigen Ausführungsformen so ausgebildet, dass eine geeignete Positionierung des neu zu melkenden Tieres 101n an jeder geeigneten Stelle möglich ist, beispielsweise indem eine Vielzahl an steuerbar aktivierbaren Barrieren, etwa in Form von massiven Balken, und dergleichen bereitgestellt werden. Es können auch andere Arten von Barrieren, beispielsweise in Kombination mit einfachen Balken, und dergleichen angewendet werden, etwa in Form von Pressluft ausstoßende Barrieren, die geringe Mengen an Pressluft aussondern, so dass diese in der Regel ausreichend sind, um die Tiere von einem Weiterschreiten abzuhalten.

Fig. 1m zeigt schematisch eine Melkstation 100 gemäß weiterer Ausführungsformen, in denen die Führungsvorrichtung 155 anstelle von oder zusätzlich von stationären aktivierbaren Barrieren eine bewegbare "Barriere" 155a bzw. 155b aufweist. Beispielsweise kann die Barriere 155a bzw. 155b an einem "Förderband" befestigt sein, das entlang der Melkplätze 150a, 150b, etc. steuerbar geführt werden kann, oder es ist eine andere geeignete Transportvorrichtung vorgesehen, um eine Bewegung entlang des Zugangs 152 zu ermöglichen. Beispielsweise lässt sich auf diese Weise die Barriere 155a, 155b an jeder beliebigen gewünschten Position anhalten und kann damit eine geeignete Warteposition für ein neu zu melkendes Tier 101n innerhalb des Zugangs 152 definieren. Ferner kann auch die Bewegungsgeschwindigkeit der Barriere 155a, 155b geeignet gesteuert werden, um damit ggf. auch die Schrittgeschwindigkeit des Tieres 101 n zu beeinflussen. Beispielsweise ist ein einer Ausführungsform die Barriere 155a als eine mechanisch stabile Barriere vorgesehen, so dass ein Überschreiten der Barriere 155a durch das Tier 101 n, selbst wenn dieses relativ "ungestüm" ist, verhindert wird. In anderen Ausführungsformen können zusätzliche oder alternative Formen der Barriere vorgesehen sein, etwa in Form von Pressluftvorrichtungen, und dergleichen. In einer weiteren Ausführungsform ist zusätzlich oder alternativ zu der Barriere 155a eine steuerbar aktivierbare Futterversorgung in Form der Einrichtung 155b vorgesehen, so dass auf diese Weise das Tier 101 n zu unterschiedlichen Ganggeschwindigkeiten veranlasst werden kann und/oder auch in einer günstigen Stimmung in einer möglichen Wartesituation gehalten werden kann. Nach Abwanderung eines Tieres, beispielsweise aus dem Melkplatz 150c, kann somit das Tier 101 n durch Deaktivieren der Barriere 155a bzw. 155b, etwa durch Hochklappen, etc. in den frei gewordenen Melkplatz 150c eintreten. Daraufhin kann die Barriere 155a, 155b in die Ausgangsposition gebracht werden, beispielsweise durch Rücklauf oder durch Umlauf, je nach Ausgestaltung der Führungsvorrichtung 155, um ein weiteres Tier gesteuert in den Zugang einzubringen.

Fig. 1n zeigt schematisch die Melkstation 100 gemäß weiterer anschaulicher Ausführungsformen. In einer Ausführungsform ist eine Sensoreinrichtung 156 vor dem Zugang 152 vorgesehen, die geeignet ausgebildet ist, die Identität eines neu zu melkenden Tieres 101 n vor dessen Zutritt zu dem Zugang 152 zu detektieren. Zu diesem Zweck weist das Tier 101 n eine geeignete Einrichtung 158, beispielsweise in Form eines elektromagnetisch abtastbaren Elements, und dergleichen auf, um eine eindeutige Kennung durch das System 156 auslesen zu können. Ferner ist in einer Ausführungsform eine weitere Datenbank 157 vorgesehen, die weitere tierspezifische Daten enthält, etwa Angaben über die Bewegungsfreudigkeit des Tieres 101 n, generell über die Mentalität des Tieres, und dergleichen. Die entsprechenden Daten aus dem Sensorsystem 156 ggf. in Kombination mit der Datenbank 157 werden der Steuereinheit 140 (siehe Fig. 1e) zugeleitet. Die Steuereinheit ermittelt ferner, wie dies auch zuvor beschrieben ist, die jeweiligen erwarteten Endzeitpunkte für die Melkvorgänge, die in den jeweiligen Melkplätzen zur Zeit ablaufen, wobei beispielsweise für den Melkplatz 250e eine Restdauer von 40 Sekunden ermittelt wird, die in diesem Beispiel im Vergleich zu den anderen erwarteten Restmelkzeit der kleinste Wert ist. Auf der Grundlage der erkannten Identität des Tieres 101 n wird in einigen Ausführungsformen mittels der tierspezifischen Daten aus der Datenbank 157 eine erwartete Dauer für das Zurücklegen der erforderlichen Strecke mittels der Steuereinheit 140 ermittelt, so dass daraufhin der Zugang 152 für das Tier 101 n so freigegeben wird, dass die Strecke zurückgelegt werden kann, so dass das Tier 101 n relativ zeitgleich mit dem Verlassen des Melkplatzes 250e eintrifft. In dieser Weise kann ohne zusätzliche Gerätekomponenten in den Melkplätzen 150a, ..., 150f und dem Zugang 152 eine deutlich höhere Effizienz erreicht werden, da sich das Tier 101 n zumindest im Zugang 152 befindet und unterwegs ist, bevor ein Melkvorgang in einem entsprechenden Melkplatz beendet ist.

In einer weiteren anschaulichen Ausführungsform ist eine automatisierte Transporteinrichtung 159 in dem Bediengang oder Wartungsgang 153 vorgesehen, um damit etwa einen Bediener oder eine automatische Vorrichtung zum Ansetzen eines Melkgeschirrs zu den jeweiligen Melkplätzen 250a, ..., 250f zu transportieren. Zu diesem Zweck werden der Transporteinrichtung 159 die entsprechenden Steuersignale 141d vom Steuergerät 140 (siehe Fig. 1e) zugeleitet, so dass die Transporteinrichtung 159 bei dem jeweiligen Melkplatz eintrifft, um möglichst ohne Zeitverzögerung entsprechende Handlungen durch Bediener oder vollautomatisiert vorzunehmen. Auf diese Weise wird somit nicht nur die Besetzung der Melkplätze 250a, ..., 250f wesentlich effizienter gestaltet auf Grund der vorausschauenden tierindividuellen Datensätze, sondern es wird auch im Bereich der weiteren betriebsnotwendigen Handlungen, etwa beim Ansetzen von Melkzeugen, und dergleichen eine deutliche Effizienzsteigerung auf Grund der geeigneten Ansteuerung der Transporteinrichtung 159 erreicht.

Es sollte beachtet werden, dass die Transporteinrichtung 159 im Zusammenwirken mit der geeigneten Steuereinheit 140 in allen anderen zuvor bereits beschriebenen Melkstationen eingesetzt werden kann.

## Patentansprüche

1. Verfahren zum Betreiben einer Melkstation (100) mit mehreren Melkplätzen (150), wobei das Verfahren die Schritte umfasst:
Aufzeichnen von entsprechenden Messdaten für jedes von mehreren Tieren, wobei die entsprechenden Messdaten einen Milchfluss eines entsprechenden Tieres repräsentieren,
Erzeugen eines individuellen Datensatzes (D₁,..D_{K-1}) für jedes der mehreren Tiere unter Anwendung der Messdaten, wobei der individuelle Datensatz (D₁,.., D_{K-1}) einen erwarteten Milchfluss des entsprechenden Tieres angibt und
Steuern zumindest eines Teils eines Melkvorgangs (M₁...,M_{K}) der mehreren Tiere und
Steuern eines Besetzens der mehreren Melkplätze (150) durch zu melkende Tiereunter Verwendung der individuellen Datensätze (D₁,..D_{K-1}) für jedes der mehreren Tiere, wobei das Besetzen der mehreren Melkplätze (150) gesteuert wird durch Ermitteln eines erwarteten Endes eines Melkvorgangs (M₁...,M_{K}) in den mehreren Melkplätzen (150).

2. Verfahren nach Anspruch 1, wobei das Steuern zumindest eines Teils des Melkvorgangs (M₁...,M_{K}) und/oder eines Besetzen der mehreren Melkplätze (150) durch zu melkende Tiereumfasst: Erfassen von aktuellen Messdaten, die den aktuellen Milchfluss während des Melkvorgangs (M₁...,M_{K}) repräsentieren, und Vergleichen der aktuellen Messdaten mit den individuellen Datensätzen (D₁,..D_{K-1}).

3. Verfahren nach Anspruch 2, das ferner umfasst: Aufzeichnen der aktuellen Messdaten als Teil der entsprechenden Messdaten zur Erzeugung eines individuellen Datensatzes (D₁,..D_{K-1}) für jedes der mehreren Tiere

4. Verfahren nach einem der vorhergehenden Ansprüche, wobei zumindest ein Teil des Melkvorganges (M₁...,M_{K}) für jedes der mehreren Tiere. gesteuert wird durch Steuern eines aktuellen Melkvakuums und/oder durch einer Stimulation und/oder durch Erkennen einer Unregelmäßigkeit im Melkvorgang (M₁...,M_{K}).

5. Verfahren nach einem der Ansprüche 1 bis 4, wobei ein zu melkendes Tierin einem Zugang, der in direkter Verbindung mit den mehreren Melkplätzen (150) steht, positioniert wird, bevor ein nächster der mehreren Melkplätze (150) nach Beendigung eines Melkvorgangs (M₁...,M_{K}) an einem der mehreren Tierefrei wird.

6. Verfahren nach einem der Ansprüche 1 bis 5, wobei das zu melkende Tiermittels einer Führungsvorrichtung (155) in dem Zugang positioniert wird.

7. Verfahren nach Anspruch 5 oder 6, wobei das zu melkende Tier in einer Warteposition unmittelbar vor einem der mehreren Melkplätze (150) angeordnet wird, der als der nächste frei werdende Melkplatz (150) auf der Grundlage der individuellen Datensätze (D₁,..D_{K-1}) bestimmt wird.

8. Verfahren nach einem der Ansprüche 5 bis 7, das ferner umfasst: Ermitteln der Identität eines zu melkenden Tieresvor dessen Positionierung in dem Zugang.

9. Melkstation (100) mit
mehreren Melkplätzen (150), die ausgebildet sind, einen zumindest phasenweise automatisierten Melkvorgang (M₁...,M_{K}) auszuführen,
einer Sensoreinrichtung (156), die ausgebildet ist, in jedem der mehreren Melkplätze (150) Messdaten zu erfassen, die den Milchfluss während des Melkvorgangs (M₁...,M_{K}) repräsentieren,
einer Datenverarbeitungseinheit (130), die mit der Sensoreinrichtung (156) koppelbar und ausgebildet ist, aus den Messdaten einen individuelle Datensatz (D₁,..D_{K-1}) für jedes gemolkene Tier zu erzeugen, wobei der individuelle Datensatz (D₁,..D_{K-1}) eine Milchflusskurve repräsentiert und
einer Steuereinheit, die mit der Datenverarbeitungseinheit (130) in Funktionsverbindung steht und ausgebildet ist, Steuersignale zur Steuerung des Melkvorgangs und zur Steuerung der Besetzung der mehreren Melkplätze (150) durch ein nächstes zu melkendes Tier unter Verwendung der individuellen Datensätzen (D₁,..D_{K-1}) bereitzustellen, wobei das Besetzen der mehreren Melkplätze (150) gesteuert wird durch eine Ermittelung eines erwarteten Endes eines Melkvorgangs (M₁...,M_{K}) in den mehreren Melkplätzen (150).

10. Melkstation (100) nach Anspruch 9, wobei die Steuereinheit ferner mit der Sensoreinrichtung (156) in Funktionsverbindung steht, so dass aktuelle Messdaten (D₁,..D_{K-1}) bei einem Melkvorgang (M₁...,M_{K}) durch die Steuereinheit abrufbar sind und wobei die Steuereinheit ferner ausgebildet ist, die Steuersignale unter Verwendung der aktuellen Messdaten (D₁,..D_{K-1}) bereitzustellen.

11. Melkstation (100) nach Anspruch 9 oder 10, wobei die Steuereinheit ausgebildet ist, Steuersignale für die Positionierung des nächsten zu melkenden Tieresso bereitzustellen, dass dieses in einem Zugang, der in direkter Verbindung mit jedem der mehreren Melkplätze (150) steht, positioniert wird, bevor ein nächster Melkplatz (150) frei wird.

12. Melkstation (100) nach Anspruch 11, die ferner eine durch die Steuersignale steuerbare Führungsvorrichtung (155) aufweist, die zur Positionierung des nächsten zu melkenden Tieres in dem Zugang verwendet wird.

13. Melkstation (100) nach Anspruch 12, wobei die Führungsvorrichtung (155) eine steuerbar aktivierbare Barriere umfasst.

14. Melkstation (100) nach Anspruch 13, wobei zumindest einigen der mehreren Melkplätze eine steuerbar aktivierbare Barriere (155a; 155b) zugeordnet ist, so dass durch die jeweils zugeordnete steuerbar aktivierbare Barriere (155a; 155b) ein Wartebereich für jeden der mindestens einigen der mehreren Melkplätze (150) benachbart zu dem jeweiligen Melkplatz temporär erzeugbar ist.

15. Melkstation (100) nach Anspruch 12, wobei die Führungsvorrichtung (155) einen steuerbar aktivierbaren Futterspender umfasst.

16. Melkstation (100) nach einem der Ansprüche 9 bis 15, die ferner eine durch die Steuereinheit gesteuerte Transporteinrichtung (152) zum Transport eines Bedieners oder einer automatischen Vorrichtung zum Ansetzen eines Melkgeschirrs (110) aufweist.

17. Melkstation (100) nach einem der Ansprüche 9 bis 16, die ferner ausgebildet ist, ein Melkvakuum und/oder eine Stimulationseinrichtung (115) und/oder eine Signalvorrichtung durch die Steuersignale (141c) der Steuereinheit zu steuern.

## Claims

1. Method of operating a milking station (100) having a plurality of milking places (150), said method comprising the steps of:
recording of respective measuring data for each of a plurality of animals, said respective measuring data representing a milk flow of a respective animal,
generating an individual data set (D₁,...D_{K-1}) for each of the plurality of animals by using the measuring data, said individual data set (D₁,...D_{K-1}) indicating a milk flow to be expected of the respective animal, and
controlling at least part of a milking process (M₁,...M_{K}) of the plurality of animals and
controlling of an occupation of the plurality of milking places (150) by animals to be milked, by using the individual data sets (D₁,...D_{K-1}) for each of the plurality of animals, wherein the occupation of the plurality of milking places (150) is controlled by determining an expected end of a milking process (M₁,...M_{K}) in the plurality of milking places (150).

2. Method according to claim 1, wherein said controlling at least part of the milking process (M₁,...M_{K}) and/or of an occupation of the plurality of milking places (150) by animals to be milked comprises: detecting of current measuring data representing the current milk flow during the milking process (M₁,...M_{K}), and comparing the current measuring data with the individual data sets (D₁,...D_{K-1}).

3. Method according to claim 2, said method further comprising: recording the current measuring data as a part of the respective measuring data for generating an individual data set (D₁,...D_{K-1}) for each of the plurality of animals.

4. Method according to one of the preceding claims, wherein at least part of the milking process for each of the plurality of animals is controlled by controlling a current milking vacuum and/or by a stimulation and/or by recognizing an irregularity in the milking process (M₁,...M_{K}).

5. Method according to one of claims 1 to 4, wherein an animal to be milked is positioned in an entrance directly connected to the plurality of milking places (150), before a subsequent one of the one or the plurality of milking places (150) becomes free after terminating a milking process (M₁,...M_{K}) of one of the plurality of animals.

6. Method according to one of claims 1 to 5, the animal to be milked being positioned in the entrance by means of a guiding device (155).

7. Method according to one of claims 5 or 6, wherein the animal to be milked is disposed in a waiting position immediately in front of one of the plurality of milking places (150), said milking place (150) being determined on the basis of the individual data sets (D₁,...D_{K-1}) as the next milking place (150) to become free.

8. Method according to one of claims 5 to 7, further comprising: determining the identity of an animal to be milked prior to its positioning in the entrance.

9. Milking station (100) comprising
a plurality of milking places (150) configured to perform a milking process (M₁,...M_{K}) automated at least in phases,
a sensor apparatus (156) configured to detect, in each of the plurality of milking places (150), measuring data representing the milk flow during the milking process (M₁,...M_{K}),
a data processing unit (130) adapted to be coupled to the sensor apparatus (156), and configured to generate an individual data set (D₁,...D_{K-1}) for each milked animal from the measuring data, said individual data set (D₁,...D_{K-1}) representing a milk flow curve, and
a control unit functionally connected to the data processing unit (130) and configured to provide, by using the individual data sets (D₁,...D_{K-1}), control signals for controlling the milking process and for controlling the occupation of the one or the plurality of milking places (150) by a following animal to be milked, wherein the occupation of the plurality of milking places (150) is controlled by a determination of an expected end of a milking process (M₁,...M_{K}) in the plurality of milking places (150).

10. Milking station (100) according to claim 9, wherein the control unit is further functionally connected to the sensor apparatus (156) so that current measuring data (D₁,...D_{K-1}) during a milking process (M₁,...M_{K}) can be retrieved by the control unit, and the control unit being further configured to provide the control signals by using the current measuring data (D₁,...D_{K-1}).

11. Milking station (100) according to claim 9 or 10, wherein the control unit is configured to provide control signals for positioning the next animal to be milked such that said animal will be positioned in an entrance directly connected with each of the plurality of milking places (150), before a subsequent milking place (150) becomes free.

12. Milking station (100) according to claim 11, further comprising a guiding device (155) controllable by the control signals, and being used for positioning the next animal to be milked in the entrance.

13. Milking station (100) according to claim 12, wherein the guiding device (155) comprises a controllably activatable barrier.

14. Milking station (100) according to claim 13, wherein at least to some of the plurality of milking places a controllably activatable barrier (155a; 155b) is assigned, such that by the respectively assigned, controllably activatable barrier (155a; 155b), a waiting area for each of the at least some of the plurality of milking places (150) adjacent to the respective milking place can be temporarily generated.

15. Milking station (100) according to claim 12, wherein the guiding device (155) comprises a controllably activatable food dispenser.

16. Milking station (100) according to one of claims 9 to 15, further comprising a transport means (152) controlled by the control unit for transporting an operator or an automated device for applying a milking cluster (110).

17. Milking station (100) according to one of claims 9 to 16, further configured to control, via the control signals (141 c) of the control unit, a milking vacuum and/or a stimulation means (115) and/or a signal apparatus.

## Revendications

1. Procédé pour faire fonctionner une station de traite (100) comprenant plusieurs postes de traite (150), le procédé présentant les étapes suivantes :
enregistrement de données de mesure correspondant à chacun de plusieurs animaux, les données de mesure correspondantes représentant un débit de lait d'un animal correspondant,
élaboration d'un jeu de données individuel (D₁,...,D_{K-1}) pour chacun desdits plusieurs animaux en utilisant les données de mesure, le jeu de données individuel (D₁,...,D_{K-1}) indiquant un débit de lait attendu de l'animal correspondant, et
commande d'au moins une partie d'une opération de traite (M₁,...,M_{K}) desdits plusieurs animaux, et
commande d'une occupation desdits plusieurs postes de traite (150) par les animaux devant être soumis à la traite, en utilisant les jeux de données individuels (D₁,...,D_{K-1}) pour chacun desdits plusieurs animaux, l'occupation desdits plusieurs postes de traite (150) étant commandée par la détermination d'un achèvement attendu d'une opération de traite (M₁,...,M_{K}) dans lesdits plusieurs postes de traite (150).

2. Procédé selon la revendication 1, d'après lequel la commande d'au moins une partie de l'opération de traite (M₁,...,M_{K}) et/ou d'une occupation desdits plusieurs postes de traite (150) par des animaux devant être soumis à la traite, comprend : le relevé de données de mesure actuelles, qui représentent le débit de lait actuel pendant l'opération de traite (M₁,...,M_{K}), et la comparaison des données de mesure actuelles aux jeux de données individuels (D₁,...,D_{K-1}).

3. Procédé selon la revendication 2, qui comprend en outre : l'enregistrement des données de mesure actuelles en tant que partie des données de mesure correspondantes pour l'élaboration d'un jeu de données individuel (D₁,...,D_{K-1}) pour chacun desdits plusieurs animaux.

4. Procédé selon l'une des revendications précédentes, d'après lequel au moins une partie de l'opération de traite (M₁,...,M_{K}) pour chacun desdits animaux, est commandée en commandant un vide actuel de traite et/ou par une stimulation et/ou par la détection d'un irrégularité dans l'opération de traite (M₁,...,M_{K}).

5. Procédé selon l'une des revendications 1 à 4, d'après lequel on positionne un animal à soumettre à la traite, au niveau d'un accès, qui est en liaison directe avec lesdits plusieurs postes de traite (150), avant qu'un prochain desdits plusieurs postes de traite (150) se libère après achèvement d'une opération de traite (M₁,...,M_{K}) sur l'un desdits plusieurs animaux.

6. Procédé selon l'une des revendications 1 à 5, d'après lequel l'animal devant être soumis à la traite est positionné dans l'accès au moyen d'un dispositif de guidage (155).

7. Procédé selon la revendication 5 ou la revendication 6, d'après lequel on dispose l'animal devant être soumis à la traite dans une position d'attente directement devant l'un desdits plusieurs postes de traite (150), qui est déterminé comme étant le prochain poste de traite (150) libéré, sur la base des jeux de données individuels (D₁,...,D_{K-1}).

8. Procédé selon l'une des revendications 5 à 7, comprenant en outre : la détermination de l'identité d'un animal devant être soumis à la traite, avant son positionnement dans l'accès.

9. Station de traite (100) comprenant
plusieurs postes de traite (150), qui sont conçus pour effectuer une opération de traite (M₁,...,M_{K}) automatisé au moins dans certaines phases,
un dispositif de capteurs (156), qui est conçu pour relever, dans chacun desdits plusieurs postes de traite (150), des données de mesure représentant le débit de lait pendant l'opération de traite (M₁,...,M_{K}),
une unité de traitement de données (130), qui peut être couplée aux dispositif de capteurs (156) et qui est conçue pour élaborer, à partir des données de mesure, un jeu de données individuel (D₁,...,D_{K-1}) pour chaque animal ayant été soumis à la traite, le jeu de données individuel (D₁,...,D_{K-1}) représentant une courbe de débit de lait, et
une unité de commande, qui est liaison fonctionnelle avec l'unité de traitement de données (130) et qui est conçue pour fournir des signaux de commande destinés à commander l'opération de traite et à commander l'occupation desdits plusieurs postes de traite (150) par un animal suivant devant être soumis à la traite, en utilisant les jeux de données individuels (D₁,...,D_{K-1}), l'occupation desdits plusieurs postes de traite (150) étant commandée par une détermination d'un achèvement attendu d'une opération de traite (M₁,...,M_{K}) dans lesdits plusieurs postes de traite (150).

10. Station de traite (100) selon la revendication 9, dans lequel l'unité de commande est, par ailleurs, en liaison fonctionnelle avec le dispositif de capteurs (156), de sorte que des données de mesure actuelles (D₁,...,D_{K-1}) lors d'une opération de traite (M₁,...,M_{K}), puissent être appelées par l'unité de commande, et dans lequel l'unité de commande est, par ailleurs, conçue pour fournir les signaux de commande en utilisant les données actuelles (D₁,...,D_{K-1}).

11. Station de traite (100) selon la revendication 9 ou la revendication 10, dans lequel l'unité de commande est conçue pour fournir des signaux de commande destinés au positionnement du prochain animal devant être soumis à la traite, de manière telle que celui-ci soit positionné dans un accès, qui est en liaison directe avec chacun desdits plusieurs postes de traite (150), avant qu'un poste de traite (150) suivant soit libéré.

12. Station de traite (100) selon la revendication 11, qui comprend par ailleurs un dispositif de guidage (155) pouvant être commandé par les signaux de commande, et qui est utilisé pour le positionnement dans l'accès, de l'animal suivant devant être soumis à la traite.

13. Station de traite (100) selon la revendication 12, dans lequel le dispositif de guidage (155) comprend une barrière pouvant être actionnée de manière commandée.

14. Station de traite (100) selon la revendication 13, dans lequel une barrière (155a; 155b) pouvant être actionnée de manière commandée est associée à au moins quelques-uns desdits plusieurs postes de traite, de manière à pouvoir réaliser temporairement, à l'aide de la barrière (155a; 155b) pouvant être actionnée de manière commandée respectivement associée, une zone d'attente pour chacun desdits au moins quelques-uns des plusieurs postes de traite (150), au voisinage du poste de traite respectivement considéré.

15. Station de traite (100) selon la revendication 12, dans lequel le dispositif de guidage (155) comprend un distributeur de nourriture pouvant être activé de manière commandée.

16. Station de traite (100) selon l'une des revendications 9 à 15, présentant par ailleurs un dispositif de transport (152), qui peut être commandé par l'unité de commande et est destiné au transport d'un opérateur ou d'un dispositif automatique de mise en place d'un appareillage de traite (110).

17. Station de traite (100) selon l'une des revendications 9 à 16, qui est par ailleurs conçue pour assurer la commande d'un vide de traite et/ou d'un dispositif de stimulation (115) et/ou d'un dispositif de signalisation, par les signaux de commande (141c) de l'unité de commande.
